(19) Europäisches Patentamt
European Patent Office
Office européen des brevets

(11) **EP 4 360 742 A1**

(12) **EUROPEAN PATENT APPLICATION**

(43) Date of publication:
**01.05.2024  Bulletin 2024/18**

(51) International Patent Classification (IPC):
***B01D 53/94*** *(2006.01)*

(21) Application number: **23189538.4**

(22) Date of filing: **03.08.2023**

(52) Cooperative Patent Classification (CPC):
**B01D 53/9418;** B01D 2255/2065;
B01D 2255/20707; B01D 2255/20723;
B01D 2255/20776; B01D 2255/2098;
B01D 2255/9032; B01D 2255/904

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Umicore AG & Co. KG
63457 Hanau-Wolfgang (DE)**

(72) Inventors:
• **SIST, Mattia
  2800 Kongens Lyngby (DK)**
• **WIDD, Anders Gustaf
  Lyngby (DK)**
• **LARSEN, Kenneth Malmstrom
  København (DK)**
• **HAMMERSØJ, Peter Sams
  65817 Eppstein (DE)**
• **VAN TENDELOO, Leen
  Lier (BE)**

(54) **ENHANCEMENT OF THE DENOX SCR PERFORMANCES OF VANDIUM-BASED SCR CATALYSTS BY USING WASHCOATS WITH DIFFERENT VANADIUM CONTENTS**

(57)    The present invention discloses emissions treatment systems for the removal of NOx from exhaust combustion gases comprising, in the following order, from upstream to downstream: a) means for the injection of ammonia or an ammonia precursor solution into the exhaust gas stream, and b) a catalytic device comprising at least one carrier substrate, a material zone A comprising a first $V/TiO_2$ SCR catalytically active composition $SCR_{first}$ which comprises at least one oxide of vanadium supported on titanium dioxide, a material zone B comprising a second $V/TiO_2$ SCR catalytically active composition $SCR_{second}$ which comprises at least one oxide of vanadium supported on titanium dioxide, wherein the two material zones are affixed to the at least one carrier substrate in such a way that the exhaust gas first comes into contact with material zone A and then with material zone B, and wherein the ratio $V_{first}:V_{second}$ of the percentages of vanadium contained in the first to the second $V/TiO_2$ SCR catalytically active composition, each calculated as $V_2O_5$, is from 0.05 to 0.75. Methods for the removal of NOx emissions from exhaust gases of internal combustion engines are also envisaged.

Fig. 1

flow direction → | A | B | S

EP 4 360 742 A1

**Description**

The present invention relates to catalytic devices for the removal of nitrogen oxides from the exhaust gas of combustion engines. The catalytic devices comprise a carrier substrate and two material zones, which can be arranged in layers or zones. Both material zones comprise a V/TiO$_2$ SCR catalyst composition which comprises at least one oxide of vanadium supported on titanium dioxide, and optionally also oxides of additional metals. The vanadium content in the zone which comes into contact with the exhaust gas first is lower than that in zone which comes into contact with the exhaust gas afterwards. Emissions treatment systems and methods for the removal of nitrogen oxides from the exhaust gas of combustion engines comprising the catalytic device are also envisaged.

## Problem to be solved by the invention

Modern internal combustion engines require the use of catalytic aftertreatment systems to reduce harmful emissions and respect the new legislation standards. The exhaust gas of combustion processes, in particular that of diesel engines, but also that of direct-injection lean-mixture-operated gasoline engines, contains carbon monoxide (CO) and hydrocarbons (HC) resulting from incomplete combustion of the fuel. In addition, the exhaust gas also contains particulate matter (PM) and nitrogen oxides (NO$_x$). Furthermore, the exhaust gas of diesel engines contains, for example, up to 15 vol.-% oxygen. It is known that the oxidizable harmful gases CO and HC can be converted to harmless carbon dioxide (CO$_2$) and water (H$_2$O) by passing them over suitable oxidation catalytic converters and that particulates can be removed by passing the exhaust gas through a suitable particulate filter. Nitrogen oxides may be converted on an SCR catalyst in the presence of oxygen to nitrogen and water by means of ammonia. "SCR" stands for "selective catalytic reduction".

A major driver for the recent and future development of catalysts are the increasingly stringent world-wide legislative emission levels for road (e.g. passenger cars, trucks) and non-road (e.g. ships, trains) applications. In the specific case of removing nitrogen oxides from the exhaust gas of lean burn engines, there is a global need for more active, more selective and more stable catalysts, due to tightened legislative emission levels and the increased need of catalysts which show a good denitration performance even at low exhaust gas temperatures. One effective method to remove nitrogen oxides (NO$_x$) from the exhaust gas of these lean burn engines is selective catalytic reduction (SCR) with ammonia (NH$_3$). In NH$_3$-SCR, the NO$_x$ molecules are catalytically reduced to N$_2$ using NH$_3$ as reducing agent. The ammonia used as reducing agent may be made available by feeding an ammonia precursor compound into the exhaust gas which is thermolyzed and hydrolyzed to form ammonia. Alternatively, the ammonia may be formed from an ammonia precursor compound by catalytic reactions within the exhaust gas. Examples of such precursor compounds are ammonium carbamate, ammonium formate and preferably urea. In most cases, ammonia is fed as a less hazardous urea solution, which is decomposed to ammonia in the catalytic unit, and can be filled and stored in the vehicle in a dedicated reservoir.

The catalytic reduction of NO$_x$ with NH$_3$ can be represented by different reaction equations. Nitric oxide (NO) is the main NO$_x$ compound produced in an engine. The reduction of NO is referred to as the "standard" NH$_3$-SCR reaction:

$$4NO + 4NH_3 + O_2 \rightarrow 4N_2 + 6H_2O \qquad (1)$$

NO$_2$ is more reactive than NO. In presence of mixtures of NO and NO$_2$, the NH$_3$-SCR reaction is easier, and the so-called "fast" NH$_3$-SCR reaction can occur:

$$2 NH_3 + NO + NO_2 \rightarrow 2 N_2 + 3 H_2O \qquad (2)$$

To take advantage of the fast NH$_3$-SCR reaction, an additional catalyst is needed to oxidize part of the NO into NO$_2$.

Also, side reactions may occur and result in unwanted products or the unproductive consumption of ammonia:

$$4NH_3 + 3O_2 \rightarrow N_2 + 6 H_2O \qquad (3)$$

$$2NH_3 + 2O_2 \rightarrow N_2O + 3 H_2O \qquad (4)$$

$$4NH_3 + 5O_2 \rightarrow 4 NO + 6 H_2O \qquad (5)$$

$$4 NH_3 + 7O_2 \rightarrow 4 NO_2 + 6 H_2O \qquad (6)$$

$$2NH_3 + 2NO_2 + H_2O \rightarrow NH_4NO_2 + NH_4NO_3 \qquad (7)$$

In official driving cycles, exhaust gas temperatures of latest generation engines and hybrid vehicles with reduced fuel consumption and low $CO_2$ emission are significantly lower than with previous engine generations. Therefore, it is necessary to obtain a $NH_3$-SCR catalyst which shows a high low-temperature $NO_x$ conversion. Furthermore, $NH_3$-SCR catalyst should release as little $N_2O$ as possible.

SCR catalysts are described extensively in the literature as well. They are generally either so-called mixed oxide catalysts, or so-called zeolite catalysts. Mixed oxide catalysts either comprise oxides of vanadium and titanium and optionally oxides of other metals like tungsten, molybdenum, antimony and cerium, or they are based on manganese-containing mixed oxides or manganese of manganese oxide supported on metal oxides. Zeolite catalysts comprise metal-promoted zeolites.

The SCR systems known in the prior art comprise SCR catalysts which effectively reduce nitrogen oxides $NO_x$ from exhaust gas flows of internal combustion engines during operation in normal to high temperature ranges, for example in temperature ranges between approximately 250°C and 450°C. However, during the cold start of an engine but also in low-load operation, the exhaust gas temperatures may fall to low temperature ranges between approximately 60°C and approximately 250°C. In such temperature ranges, conventional SCR catalysts, which are either based on oxides of vanadium and titanium or on metal-promoted zeolites, do not succeed in effectively reducing $NO_x$ from exhaust gas flows. The reason for this is that engines generally generate only little $NO_2$ and oxidation catalysts do not convert enough NO into $NO_2$ at the temperatures during the cold start and the warm-up phase (< 150°C) for the $NO_x$ reduction to become effective. Moreover, it is difficult to sufficiently provide ammonia from urea in such temperature ranges for effective $NO_x$ reduction, since thermolysis and hydrolysis of the urea sometimes proceed incompletely. In order to convert more NO to $NO_2$ in low exhaust gas temperature operating ranges, an oxidation catalyst with large amounts of platinum can be used. Oxidation catalysts of this type are costly and can entail additional disadvantages.

The person skilled in the art is also aware of so-called low-temperature SCR catalysts, which can effectively reduce nitrogen oxides at low temperatures below a temperature threshold value of 100°C to 250°C, sometimes even at temperatures below 100°C. Catalysts comprising at least one oxide of vanadium supported on titanium dioxide, hereinafter referred to as $V/TiO_2$ catalysts, show a good low-temperature SCR performance.

By tuning the amount of the at least one oxide of vanadium, and if present, also the amount of other metal oxides like oxides of tungsten, antimony, or cerium, $V/TiO_2$ catalysts can be designed to be active in the low-temperature or high-temperature range. Typically, the higher the vanadium content, the less selective the catalyst is at high temperatures, which means that improving low temperature performance by increasing the amount of vanadium in the catalyst comes at expenses of the high temperature performances.

WO 2011/081727 A1 discloses a selective catalytic reduction system for treating diesel exhaust gases which contain nitrogen oxides and diesel soot particulate. The system comprises a catalyst material and a capture material for capture of volatilized compounds. The catalyst material comprises a majority phase comprising a titania-based support material, and a minority phase comprising a catalyst component comprising at least one oxide of vanadium, silicon, tungsten, molybdenum, iron, cerium, phosphorous, copper, or manganese. The capture material comprises a majority phase for capturing a minority phase comprising volatile oxides or hydroxides originating from the catalyst material, wherein the minority phase of the capture material maintains a total fractional monolayer coverage on the majority phase of the capture material of about 5 or less. The capture material is positioned in a mixture with the catalyst material, or is located downstream of the catalyst material or is positioned in a mixture with the catalyst material and is located downstream of the catalyst material. The catalyst and capture materials are typically composed of a majority phase (mass fraction greater than about 0.7) and one or more minority phases (mass fraction less than about 0.3) wherein the minority phase is viewed as existing on the surface of the majority phase. For example, titania-based SCR catalysts typically contain a minority phase comprising vanadia (generally less than 5 %), tungsta (generally less than 15%), and optionally silica (generally less than 15%), that have been deposited on the surface of the titania (majority phase).The capture material typically comprises a majority phase of high surface area oxides such as silica-stabilized titania, alumina, or stabilized alumina, for example, wherein the capture material maintains a low total fractional monolayer coverage of minority phase oxides for the duration of the extreme exposure. The method involves treatment of hot exhaust streams by both the catalyst material and capture material, wherein the capture material can be in a mixture with the catalyst material, or can be located downstream thereof, or both, but still be maintained at the extreme temperatures. Volatile catalyst components such as vanadia and tungsta are thus removed from the vapor phase of the exhaust gas. WO 2011/081727 A1 is silent about the $N_2O$ selectivity and also about the low temperature performance of the disclosed SCR system.

US 2020/276561 A1 discloses a catalyst composition for the selective catalytic reduction of nitrogen oxides comprising at least one oxide of vanadium in an amount of 2 to 6 wt.-%, at least one oxide of tungsten in an amount of 0.5 to 2 wt.-%, at least one oxide of cerium in an amount of 2 to 4 wt.-%, at least one oxide of antimony in an amount of 1 to 7 wt.-% and at least one oxide of titanium; and optionally at least one oxide of silicon in an amount of 2 to 7 wt.-%; and/or optionally at least one oxide of molybdenum, niobium, zirconium, tantalum and/or hafnium in a total amount of these oxides of 0.5 to 20 wt.-%; in each case based on the total weight of the catalyst and calculated as $V_2O_5$, $WO_3$, $CeO_2$, $Sb_2O_5$, $SiO_2$, MoOs, $Nb_2O_5$, $ZrO_2$, $Ta_2O_5$, $HfO_2$, or TiOz. The amount of the at least one oxide of TiO2 is measured so that the weight ratios of all oxides which are present in the catalyst add up to 100%. The catalyst composition show good NOx conversion in both the fresh and the aged state, and both in the standard and the fast SCR reaction. The disclosure is silent about the $N_2O$ selectivity, and zoned or layered catalysts are not mentioned, either.

WO 2022/058404 A1 discloses a catalyst composition for the selective catalytic reduction, consisting of at least one oxide of vanadium in an amount of 2.0 to 4.0 wt.-%, calculated as $V_2O_5$ and based on the total weight of the catalyst composition, at least one oxide of tungsten in an amount of 2.5 to 7.2 wt.-%, calculated as $WO_3$ and based on the total weight of the catalyst composition, at least one oxide of antimony in an amount of 0.6 to 3.4 wt.-%, calculated as $Sb_2O_5$ and based on the total weight of the catalyst composition, at least one oxide of zirconium in an amount of 0 to 1.0 wt.-%, calculated as ZrOz and based on the total weight of the catalyst, and at least one oxide of titanium in an amount of 84.6 to 94.9 wt.-% calculated as TiOz and based on the total weight of the catalyst, wherein the weight ratio of the oxides of vanadium, tungsten, antimony, titanium and optionally zirconium, calculated as $V_2O_5$, $WO_3$, $Sb_2O_5$, $TiO_2$ and optionally $ZrO_2$, respectively, add up to 100 wt.-%. These SCR catalysts are optimized simultaneously with respect to low-temperature activity (T<250° C.) on the one hand and thermal stability on the other hand. Layering and zoning of washcoats comprising these catalyst compositions is only mentioned as a general option, but not specified.

US 2016/288094 A1 discloses a catalyst for the selective catalytic reduction of nitrogen oxides comprising two catalytically active layers A and B. It is the aim of this invention to provide an SCR catalyst with the highest possible $NO_x$ conversion together with a good selectivity. The SCR catalyst of this invention is based on oxides of vanadium on a carrier oxide. This vanadium-based catalyst should be optimized simultaneously with respect to low-temperature activity (T < 250°C) and high-temperature selectivity (T ≥ 500°C). Layer A must comprise at least one oxide each of vanadium and tungsten, and layer B must comprise at least one oxide each of vanadium, tungsten and silicon. The proportion of the at least one oxide of vanadium in layer A in wt% with respect to the total weight of the layer A is greater than the proportion of the at least one oxide of vanadium in layer B in wt% with respect to the total weight of layer B. Furthermore, the proportion of layer A in wt% with respect to the total weight of layers A and B is greater than the proportion of layer B. The carrier oxide is selected from titanium dioxide, zirconium dioxide, or aluminum oxide, preferably titanium dioxide. Both layers A and B may, independently from one another, additionally comprise additional metal oxides, wherein the metal is selected from Cu, Fe, Mn, Mo, Sb, Nb, Ag, and a rare earth metal. The rare earth metal is preferably selected from La, Ce, Pr, Nd, Sm, Gd, Tb, Dy, Er and Y. Layer A may also additionally comprise an oxide of Pd or Pt. Although A and B are called "layers", they can, according to the disclosure of US 2016/288094 A1, be arranged in the SCR catalyst in the form of layers, i.e. one layer on top of the other one; or in the form of zones, i.e. adjacent to one another. Nonetheless, layer B comes into contact with the exhaust gas to be cleaned before layer A. This means that either layer A forms the bottom layer, and layer B forms the top layer, if it deals with a layered arrangement; or that layer B forms the upstream zone, and layer A forms the downstream zone, if it deals with a zoned arrangement. In zoned arrangements, layer A is applied from end a of the catalytic supporting body to a length $L_a$, and layer B is applied from end b of the catalytic supporting body over a length $L_b$, wherein $L_a+L_b=L$, and L is the total length of the catalytic supporting body. $L_a$ amounts to 50 to 75% of length L, and $L_b$ amounts to 25 to 50% of length L. Examples 5 to 8 are the only Examples showing such a zoned arrangement. In all these Examples, zone A has a length $L_a$ of 75%, and zone B has a length $L_b$ of 25% of length L. Both washcoats have a loading of 280 g/L each. The washcoat of zone A comprises 2.2 wt% $V_2O_5$ and 10 wt% $WO_3$ on a TiOz carrier. The washcoat in zone B comprises 1.8 wt% $V_2O_5$, 10 wt% $WO_3$ and 8.8 wt% or 9.7wt% SiOz on a TiOz carrier. The ratio of the percentages by weight of vanadium in the washcoats of the inlet zone (zone B) to the outlet zone (zone A) is 0.81. The NO rates of the aged catalysts were tested in a quartz glass reactor between 150 and 540°C under stationary conditions (GHSV= 30000l/h$^{-1}$, synthesis gas composition: 500 ppm NO, 450 ppm $NH_3$ ($\alpha=\chi NH_3/\chi NO_x=0.9$; $\chi NO_x=\chi NO+\chi NO_2$, where $\chi$ denoted the concentration in each case), 5% $O_2$, 5% $H_2O$, remainder $N_2$. The NO rates in %, standardized to $\alpha$, were 37 to 40% at 200°C and 52 to 64% at 500°C. US 2016/288094 A1 is silent about the formation of nitrous oxide $N_2O$.

V/$TiO_2$-based SCR catalysts are widely used in vehicles, in particular in heavy-duty diesel vehicles, also known as HDD vehicles. According to European Legislation, HDD vehicles have an empty weight of more than 3.5 tons. With incoming more stringent legislation, e.g. Euro 7, it is desirable that the SCR catalysts performs well at low temperatures without compromising high temperature performances.

However, there is still a need for improved vanadium-containing SCR catalysts which show both a good low temperature (T < 250°C) and a good high temperature $NO_x$ conversion (T ≥ 500°C), and also a low $N_2O$ selectivity.

## Problem to be solved by the invention

It is an object of the present invention to provide emissions treatment systems for the removal of $NO_x$ from exhaust combustion gases which contain vanadium-based SCR catalyst, which show both a good low temperature (T < 250°C) and a good high temperature $NO_x$ conversion (T ≥ 500°C), and also a low $N_2O$ selectivity. Methods for making the novel emissions treatment systems and uses thereof are also envisaged.

**Solution of the problem**

The object to provide emissions treatment systems for the removal of $NO_x$ from exhaust combustion gases which contain vanadium-based SCR catalysts, which show both a good low temperature (T < 250°C) and a good high temperature $NO_x$ conversion (T ≥ 500°C), and also a low $N_2O$ selectivity is solved by emissions treatment systems comprising, in the following order, from upstream to downstream:

a) means for the injection of ammonia or an ammonia precursor solution into the exhaust gas stream, and
b) a catalytic device comprising

i. at least one carrier substrate,

ii. a material zone A comprising a first $V/TiO_2$ SCR catalytically active composition $SCR_{first}$ which comprises at least one oxide of vanadium supported on titanium dioxide,

iii. a material zone B comprising a second $V/TiO_2$ SCR catalytically active composition $SCR_{second}$ which comprises at least one oxide of vanadium supported on titanium dioxide,

wherein the two material zones are affixed to the at least one carrier substrate in such a way that the exhaust gas first comes into contact with material zone A and then with material zone B, and

wherein the ratio $V_{first}:V_{second}$ of the percentages by weight of vanadium contained in the first to the second $V/TiO_2$ SCR catalytically active composition, each calculated as $V_2O_5$, is from 0.05 to 0.75.

The emissions treatment systems for the removal of $NO_x$ from exhaust combustion gases which contain vanadium-based SCR catalyst, which show both a good low temperature (T < 250°C) and a good high temperature $NO_x$ conversion (T ≥ 500°C), and also a low $N_2O$ selectivity, the methods for making said emissions treatment systems and uses thereof are explained below, with the invention encompassing all the embodiments indicated below, both individually and in combination with one another.

A "catalytically active composition" is a substance or a mixture of substances which is capable to convert one or more components of an exhaust gas into one or more other components. An example of such a catalytically active composition is, for instance, an oxidation catalyst composition which is capable of converting volatile organic compounds and carbon monoxide to carbon dioxide or ammonia to nitrogen oxides. Another example of such a catalytically active composition is, for example, a selective catalytic reduction catalyst (SCR) composition which is capable of converting nitrogen oxides to nitrogen and water. In the context of the present invention, an SCR catalyst is a catalyst comprising a carrier substrate and a washcoat comprising an SCR catalytically active composition. An ammonia slip catalyst (ASC) is a catalyst comprising a carrier substrate, a washcoat comprising an oxidation catalyst, and a washcoat comprising an SCR catalytically active composition. SCR catalyst compositions comprising at least one oxide of vanadium supported on titanium dioxide are hereinafter referred to as "$V/TiO_2$ catalyst compositions". A "catalytically active composition" may also comprise a substantially inert carrier material. In the present invention, $TiO_z$ is the carrier material of the catalytically active composition, and the at least one oxide of vanadium, and optionally oxides of at least one other metal, represent the catalytically active metal oxides. The "first and the second SCR catalyst", respectively, refer to a carrier substrate and a washcoat comprising the first $V/TiO_2$ SCR catalytically active composition $SCR_{first}$ or the $V/TiO_2$ SCR catalytically active composition $SCR_{second}$, respectively.

A molecular sieve is a material with pores, i.e. with very small holes, of uniform size. These pore diameters are similar in size to small molecules, and thus large molecules cannot enter or be adsorbed, while smaller molecules can. In the context of the present invention, a molecular sieve is zeolitic. Zeolites are made of corner-sharing tetrahedral $SiO_4$ and $AlO_4$ units. They are also called "silicoaluminates" or "aluminosilicates". In the context of the present invention, these two terms are used synonymously.

As used herein, the terminology "non-zeolitic molecular sieve" refers to corner-sharing tetrahedral frameworks wherein at least a portion of the tetrahedral sites are occupied by an element other than silicon or aluminum. If a portion, but not all silicon atoms are replaced by phosphorous atoms, it deals with so-called "silico aluminophosphates" or "SAPOs". If all silicon atoms are replaced by phosphorous, it deals with aluminophosphates or "AlPOs".

A "zeolite framework type", also referred to as "framework type", represents the corner-sharing network of tetrahedrally coordinated atoms. It is common to classify zeolites according to their pore size which is defined by the ring size of the biggest pore aperture. Zeolites with a large pore size have a maximum ring size of 12 tetrahedral atoms, zeolites with a medium pore size have a maximum pore size of 10 and zeolites with a small pore size have a maximum pore size of 8 tetrahedral atoms. Well-known small-pore zeolites belong in particular to the AEI, CHA (chabazite), ERI (erionite), LEV (levyne), AFX and KFI framework. Examples having a large pore size are zeolites of the faujasite (FAU) framework type and zeolite Beta (BEA).

A "zeotype" comprises any of a family of materials based on the structure of a specific zeolite. Thus, a specific "zeotype" comprises, for instance, silicoaluminates, SAPOs and AlPOs that are based on the structure of a specific zeolite framework type. Thus, for example, chabazite (CHA), the silicoaluminates SSZ-13, Linde R and ZK-14, the silicoaluminophosphate SAPO-34 and the aluminophosphate MeAlPO-47 all belong to the chabazite framework type. The skilled person knows which silicoaluminates, silico aluminophosphates and aluminophosphates belong to the same zeotype. Furthermore, zeolitic and non-zeolitic molecular sieves belonging to the same zeotype are listed in the database of the International Zeolite Association (IZA). The skilled person can use this knowledge and the IZA database without departing from the scope of the claims.

The silica to alumina molar ratio ($SiO_2:Al_2O_3$) of the zeolites is hereinafter referred to as the "SAR value".

A "catalyst carrier substrate", also just called a "carrier substrate" is a support to which the catalytically active composition is affixed and shapes the final catalyst. The carrier substrate is thus a carrier for the catalytically active composition. "Extruded substrates" are made of a slurry comprising the inert substrate material and at least one catalytically active composition. As a consequence, the at least one catalytically active composition is affixed to the carrier substrate by mixing it with the inert substrate material, followed by extruding the mixture.

A "washcoat" as used in the present invention is an aqueous or organic solvent based suspension of a catalytically active composition and optionally at least one binder and/or optionally at least one stabilizer. Suitable organic solvents are, for example, organic anhydrides like acetic anhydride; alcohols like methanol, ethanol, n-propanol, iso-propanol, n-butanol, 2-butanol, isobutanol and tert.-butanol; aldehydes like formaldehyde, acetaldehyde, propionaldehyde, butyraldehyde, isovaleraldehyde, benzaldehyde, cinnamaladehyde, tolualdehyde and furfural; ketones like acetone, methyl ethylketone and cyclohexanone; ethers like tetrahydrofuran and 1,4-dioxane and mixtures of these organic solvents. Materials which are suitable binders and stabilizers are, for example, aluminum oxide, silicon dioxide, zirconium dioxide, cerium dioxide, lanthanum oxide or mixtures thereof, for example mixtures of silica and alumina.

A washcoat that has been affixed to a catalyst carrier substrate is called a "coating". It is also possible to affix two or more washcoats to the carrier substrate. The skilled person knows that affixing two or more washcoats onto one single carrier substrate is possible by "layering" or by "zoning", and it is also possible to combine layering and zoning. In case of layering, the washcoats are affixed successively onto the carrier substrate, one above the other. The washcoat that is affixed first and thus in direct contact with the carrier substrate represents the "bottom layer", and the washcoat that is affixed last is the "top layer". In case of zoning, a first washcoat is affixed onto the carrier substrate from a first face side A of the carrier substrate towards the other face side B, but not over the entire length of the carrier substrate, but only to an endpoint which is between face sides A and B. Afterwards, a second washcoat is affixed onto the carrier, starting from face side B until an endpoint between face sides B and A. The endpoints between face sides A and B or face sides B and A of the first and the second washcoat need not be identical: if they are identical, then both washcoat zones are adjacent to one another. If, however, the endpoints of the two washcoat zones, which are both located between face sides A and B of the carrier substrate, are not identical, there can be a gap between the first and the second washcoat zone, or they can overlap. As mentioned above, layering and zoning can also be combined, if, for instance, one washcoat is applied over the entire length of the carrier substrate, and the other washcoat is only applied from one face side to an endpoint between both face sides. This also includes embodiments wherein one layer, namely the bottom layer, covers the entire length of the substrate, and the other layer, namely the top layer, covers only a fraction of the full length of the catalyst. In this embodiment, the top layer preferably extends from the upstream face side until an endpoint between the upstream and the downstream face side, so that the exhaust gas comes into contact with the top layer first. It is furthermore possible to concomitantly extrude the material for the carrier material and the material for material zone B to form an extruded carrier substrate, and to coat material zone A on said extruded substrate, either over its full axial length, or only over a part of the full axial length, starting from the upstream face side of the carrier substrate.

In embodiments of the present invention, the washcoat suspension comprises only some of the components of the catalytically active composition. In these embodiments, the other components of the catalytically active composition are applied by impregnation after the washcoat has been affixed to the carrier substrate. It is even possible to apply a washcoat which comprises only the carrier material of the catalytically active composition and optionally at least one binder and/or at least one additive to the carrier substrate, and to apply all other components of the catalytically active composition afterwards by impregnation. Details of combining washcoating and impregnation are explained below.

In the context of the present invention, the "washcoat loading" is the sum of a) the mass of the catalytically active composition per volume of the carrier substrate and b) the masses of the at least one binder and/or at least one stabilizer, if binders and/or stabilizers are present in the washcoat. This definition of "washcoat loading" also applies if the catalytically active composition is applied by combining washcoating and impregnation: in this case, the "mass of the catalytically active composition" is the sum of all components of the catalytically active composition which are applied either by washcoating or by impregnation.

The skilled person knows that washcoats are prepared in the form of suspensions and dispersions. Furthermore, it is well known to the skilled person that washcoats can be affixed to carrier substrates comprising of an inert substrate material and to extruded carrier substrates alike.

In the context of the present invention, a "material zone" is an area comprising one or more substances which have specific characteristics or which can be used for specific purpose. More specifically, the one or more substances in the "material zones" according to the present invention are capable of converting nitrogen oxides from combustion exhaust gases into harmless gases in an SCR reaction. "Material zones" are made of washcoats which have been affixed to a carrier substrate as explained above.

According to the present invention, the ratio $V_{first}:V_{second}$ of the percentages per weight of vanadium contained in the first to the second $V/TiO_2$ SCR catalytically active composition, each calculated as $V_2O_5$, is from 0.05 to 0.75. This ratio must be distinguished from the total vanadium content in a washcoat. The ratio $V_{first}:V_{second}$ of the percentages of vanadium contained in the first to the second $V/TiO_2$ SCR catalytically active composition, each calculated as $V_2O_5$, refers to the amount of vanadium in the individual $V/TiO_2$ SCR catalytically active compositions, irrespective of their washcoat loading. If, for example, the first $V/TiO_2$ SCR catalytically active composition comprises 1 wt.-% of $V_2O_5$, and the second $V/TiO_2$ SCR catalytically active composition comprises 2 wt.-% of $V_2O_5$, then the ratio $V_{first}:V_{second}$ of the percentages of vanadium, calculated as $V_2O_5$, is 1:2=0.5, irrespective of the coat load. The skilled person can easily calculate the ratio $V_{first}:V_{second}$ of the percentages of vanadium contained in the first to the second $V/TiO_2$ SCR catalytically active composition.

The inventors of the present invention have found that the ratio $V_{first}:V_{second}$ of the percentages per weight of vanadium contained in the first to the second $V/TiO_2$ SCR catalytically active composition is decisive to obtain the desired vanadium-based SCR catalysts, which show both a good low temperature (T<250°C) and high temperature (T≥500°C) $NO_x$ conversion and also a low $N_2O$ selectivity. Merely adjusting the total amounts of vanadium in material zones A and B by selecting lower washcoat loadings for material zone A and higher washcoat loading for material zone B, while keeping the same percentage of Vanadium in zone A and B, does not provide this desired effect.

In the context of the present invention, the first $V/TiO_2$ SCR catalytically active composition is also called "low vanadium" zone, layer or catalyst, and the second $V/TiO_2$ SCR catalytically active composition is also called "high vanadium" zone, layer or catalyst.

Suspensions and dispersions are heterogeneous mixtures comprising solid particles and a solvent. The solid particles do not dissolve, but get suspended throughout the bulk of the solvent, left floating around freely in the medium. If the solid particles have an average particle diameter of less than or equal to 1 μm, the mixture is called a dispersion; if the average particle diameter is larger than 1 μm, the mixture is called a suspension. Washcoats in the sense of the present invention comprise a solvent, usually water, and suspended or dispersed particles represented by particles of one or more the catalytically active compositions, and optionally particles of at least one binder as described above. This mixture is often referred to as the "washcoat slurry". The slurry is applied to the carrier substrate and subsequently dried to form the coating as described above. In the context of the present invention, the term "washcoat suspension" is used for mixtures of solvents, particles of one or more catalytically active compositions, and optionally particles of at least one binder, irrespective of the individual or average particle sizes. This means that in "washcoat suspensions" according to the present invention, the size of individual particles as well as the average particle size of the one or more catalytically active solid particles can be less than 1 μm, equal to 1 μm and/or larger than 1 μm.

The term "mixture" as used in the context of the present invention is a material made up of two of more different substances which are physically combined and in which each ingredient retains its own chemical properties and makeup. Despite the fact that there are no chemical changes to its constituents, the physical properties of a mixture, such as its melting point, may differ from those of the components.

A "catalysed substrate monolith" is a carrier substrate comprising a catalytically active composition. The carrier may be coated with a washcoat comprising the catalytically active composition, wherein the washcoat comprises a catalytically active composition and optionally at least one binder. Alternatively, the catalytically active composition can be a component of the carrier substrate itself.

A "device" as used in the context of the present invention is a piece of equipment designed to serve a special purpose or perform a special function. The catalytic devices according to the present invention serve the purpose and have the function to remove nitrogen oxides from the exhaust gas of combustion engines. A "device" as used in the present invention may consist of one or more catalysts, also called "catalytic articles" or "bricks" as defined above.

An "emissions treatment system" is a set of connected devices for the purification of exhaust combustion gases, for example a set of a) means for the injection of ammonia and b) a first and a second SCR catalyst. A emissions treatment system may also comprise additional devices, for example at least one of a diesel oxidation catalyst (DOC), an ammonia slip catalyst (ASC), a diesel particulate filter (DPF), a $NO_x$ storage catalyst (NSC), a lean $NO_x$ trap (LNT); or combinations of these devices like, for instance, an oxidation catalytically active composition on a filter, also called a "catalysed particle filter" (CPF); or an SCR catalytically active composition on a filter, also called "SDPF", and the like. The skilled person knows which devices can be used in an emissions treatment system, and he can apply this knowledge to the present invention without departing from the scope of the claims.

"Upstream" and "downstream" are terms relative to the normal flow direction of the exhaust gas in the exhaust pipeline. A "zone or catalyst 1 which is located upstream of a zone or catalyst 2" means that the zone or catalyst 1 is positioned closer to the source of the exhaust gas, i.e. closer to the motor, than the zone or catalyst 2. The flow direction is from the source of the exhaust gas to the exhaust pipe. Accordingly, in this flow direction the exhaust gas enters each zone or catalyst at its inlet end, and it leaves each zone or catalyst at its outlet end.

The term "nitrogen oxides", as used in the context of the present invention, encompasses nitrogen monoxide (NO), nitrogen dioxide ($NO_2$), and nitrous oxide ($N_2O$). By contrast, the term "$NO_x$", however, only encompasses NO and $NO_2$, but not $N_2O$, although nitrous oxide is also an oxide of nitrogen. This distinction between "nitrogen oxides" and "NOx" is, however, widely used by skilled persons.

The term "$NO_x$ conversion", as used in the context of the present invention, means the percent conversion of $NO_x$ without taking $N_2O$ in the gas phase after the catalyst into account:

$$NO_x \ conversion \ [\%] = \left(1 - \frac{NO_x(ppm)_{,out}}{NO_x(ppm)_{,in}}\right) \times 100$$

The amount of $N_2O$ can be calculated as follows:

$$N_2O(ppm) = N_2O(ppm)_{out} - N_2O(ppm)_{in}$$

or

$$N_2O_{yield} = \frac{N_2O(ppm)_{out} - N_2O(ppm)_{in}}{NO_x(ppm)_{in}}$$

Wherein

$N_2O(ppm)$ = difference of the amount of $N_2O$ in ppm between the outlet and the inlet end of the catalytic device
$N_2O(ppm)_{in}$ = amount of $N_2O$ at the inlet end of a catalytic device
$N_2O(ppm)_{out}$ = amount of $N_2O$ at the outlet end of a catalytic device
$NO_{x,in}$ = amount of $NO_x$ in ppm at the inlet end of a catalytic device
$N_2O_{yield}$ = quotient of the difference of the amount of $N_2O$ at the inlet end minus the amount of $N_2O$ at the outlet end of a catalytic device, divided by the amount of $NO_x$ at the inlet end, all amounts in ppm

The "catalytic activity" or just "activity" is the increase in rate of a chemical reaction caused by the presence of a catalytically active composition.

The skilled person knows that the SCR reaction requires a reductant to reduce nitrogen oxides to nitrogen and water. A suitable reductant is ammonia, and the SCR reaction in presence of ammonia is known as "$NH_3$-SCR". The ammonia used as reducing agent may be made available by feeding liquid or gaseous ammonia or an ammonia precursor compound into the exhaust gas. If an ammonia precursor is used, it is thermolyzed and hydrolyzed to form ammonia. Examples of such ammonia precursors are ammonium carbamate, ammonium formate and preferably urea. Alternatively, the ammonia may be formed by catalytic reactions of the ammonia precursor within the exhaust gas.

A widespread method for injecting ammonia is to carry along an aqueous urea solution and to dose it into the catalyst according to the present invention via an upstream injector and a dosing unit as required. Means for injecting ammonia, for example an upstream injector and a dosing unit, are well known to the skilled person and can be used in the present invention without departing from the scope of the claims.

The at least one carrier substrate onto which material zones A and B are affixed can be selected from so-called ceramic flow-through substrates, ceramic wall-flow filters, ceramic partial filters as well as corrugated substrates, extruded substrates, wound or packed fiber filters, open cell foams and sintered metal filters. In preferred embodiments, the at least one carrier substrate is selected from ceramic flow-through substrates, ceramic wall-flow filters, ceramic partial filters, corrugated substrates and extruded substrates. Particularly preferred are ceramic flow-through substrates and corrugated substrates. All carrier substrates listed above preferably have a honeycomb structure. Ceramic wall-flow filters are monoliths comprising a porous substrate and having a first face side A and a second face side B defining a longitudinal direction therebetween and first and second pluralities of channels extending in the longitudinal direction; wherein the first plurality of channels provides a first plurality of inner surfaces and is open at the first face A and closed at the second face B, and wherein the second plurality of channels is open at the second face B and closed at the first face A, and wherein the channels are bounded to and separated from one another by porous walls. The channels are usually closed with plugs. When a ceramic wall-flow filter is mounted in an exhaust treatment system, the channels which are open at the upstream side of the gas flow direction and closed at the downstream side are called "inlet channels", and the channels which are closed at the upstream side of the gas flow direction and open at the downstream side are called "outlet channels".

In partial filters, only one plurality of channels is closed with plugs, i.e. either only the first or only the second plurality of channels as described above. Inlet and outlet channels are defined in the same manner as for wall-flow filters with the only difference that, in the case of partial filters, one of the two channel types is open on both sides.

Ceramic flow-through substrates, ceramic wall-flow filters and ceramic partial filters may consist of inert materials, such as silicon carbide, aluminum titanate and cordierite. Silicon carbide, aluminum titanate and cordierite are ceramic materials. Such carrier substrates are well-known to the skilled person and available on the market. Corrugated substrates are honeycomb flow-through substrates made of ceramic E-glass fiber paper or of metal or metal alloys. They are also well known to the skilled person and available on the market. Extruded substrates comprise of an inert substrate material, which can be a ceramic material, and at least one catalytically active composition as described above.

In one embodiment, material zones A and B are affixed on the same carrier substrate, material zone A represents the upstream zone, material zone B represents the downstream zone; and material zones A and B are either arranged directly adjacent to one another, with or without overlapping, or there is a gap between them, and the carrier substrate is a ceramic flow-through substrate or a corrugated substrate. If material zones A and B overlap, material zone A is located in the overlap area preferably above zone B. The skilled person knows how to affix washcoats so that two material zones are arranged directly adjacent to one another, or with a gap, or with an overlap, according to the intended design, and he can apply this knowledge without departing from the scope of the claims. As mentioned above, in these layered arrangements, both material zones A an B can, independently from one another, extend over the entire axial length of the carrier substrate or only a fraction thereof if they are affixed in the form of washcoats.

In another embodiment of the present invention, material zones A and B are affixed on two different carrier substrates, wherein material zone A is affixed on the upstream carrier substrate, and material zone B is affixed on the downstream carrier substrate; wherein the two substrates are, independently from one another, selected from ceramic flow-through substrates, corrugated substrates, extruded substrates and ceramic wall-flow filters, and wherein the two substrates are either arranged directly adjacent to one another, but without overlapping or there is a gap between them, and wherein,

- if the first, upstream carrier substrate is an extruded substrate, the material for the first carrier substrate and the material for material zone A are extruded to form the upstream extruded carrier substrate, and/or
- if the second, downstream carrier substrate is an extruded substrate, the material for the second carrier substrate and the material for material zone B are extruded to form the downstream extruded carrier substrate, and/or
- if the first, upstream carrier substrate is a ceramic wall-flow filter or a ceramic partial filter, material zone A is affixed on the inlet and/or outlet channels of said ceramic wall-flow filter or ceramic partial filter, and/or
- if the second, downstream carrier substrate is a ceramic wall-flow filter or a ceramic partial filter, material zone B is affixed on the inlet and/or outlet channels of said ceramic wall-flow filter or ceramic partial filter.

In one embodiment of this arrangement, wherein material zones A and B are affixed on two different carrier substrates, both carrier substrates are, independently from one another, selected from ceramic flow-through substrates, corrugated substrates and extruded substrates. Even more preferably, the two carrier substrates are, independently from one another, selected from ceramic flow-through substrates and corrugated substrates.

In another embodiment of this arrangement, wherein material zones A and B are affixed on two different carrier substrates, at least one of the carrier substrates is a ceramic wall-flow filter, and/or material zone A or B is affixed on the inlet and/or outlet channels of the wall-flow filter as described above. Even more preferred, one of the carrier substrates is a wall-flow filter, and the other carrier substrate is a flow-through substrate or a corrugated substrate.

In another embodiment of the present invention, material zones A and B are affixed on the same carrier substrate in the form of a layered arrangement, wherein material zone B is affixed to the carrier substrate, and material zone A is affixed to material zone B, and wherein the carrier substrate is a ceramic flow-through substrate, a corrugated substrate or an extruded substrate, and wherein, if the carrier substrate is an extruded substrate, the material for the carrier substrate and the material for material zone B are extruded to form the extruded carrier substrate. As mentioned above, in these layered arrangements, both material zones A an B can, independently from one another, extend over the entire axial length of the carrier substrate or only a fraction thereof if they are affixed in the form of washcoats.

In another embodiment of the present invention, material zones A and B are affixed on the same carrier substrate, which is a ceramic wall-flow filter or a ceramic partial filter, and material zone is affixed on the inlet channels, and material zone B is affixed on the outlet channels.

In embodiments wherein material zones A and B are present on two different carrier substrates, the two carrier substrates can be directly adjacent to one another, or there can be a gap between them.

"Directly adjacent" means that the downstream face side of the upstream carrier substrate is substantially adjoining the upstream face side of the downstream carrier. By contrast, a "gap" means that the distance between the downstream face side of the upstream carrier and the upstream face side of the downstream carrier, the direction of the gas flow, has a length of at least 0.5 cm.

In embodiments wherein material zones A and B are affixed on two separate carrier substrates, said carrier substrates can be identical or different from one another. If the two carrier substrates are identical, they are both of the same species of substrates. This means, for example, that they are both ceramic flow-through substrates, or both corrugated substrates, or both ceramic wall-flow filters. Furthermore, if the two carrier substrates are both of the same species, they are both made of the same material, have the same pore sizes, wall thicknesses, cpsi (cells per square inch) and the like.

If however, the two carrier substrates, they differ in at least one of the following features:

- they are of different species, for example one is a ceramic flow-through substrate, and the other one is a corrugated substrate, a ceramic wall-flow filter, or an extruded substrate and/or
- they are made of different materials, for example two ceramic flow-through substrates of two different materials selected from silicon carbide, aluminum titanate and cordierite,
- they differ in their pore sizes, wall thicknesses, or cpsi values.

In all embodiments described above wherein material zones A and B are present on two different carrier substrates and wherein there is a gap between these two carrier substrates, another device can optionally be placed between these two carrier substrates. Said other device can be another catalytic device or a measuring device. The other catalytic device can be another SCR catalytic device, or a ceramic wall-flow filter, or a ceramic partial filter, or an SDPF. In case of another SCR catalytic device or an SDPF, the SCR catalytically active composition is a vanadium-based catalytically active composition or a transition metal-promoted zeolite. If the other device is a measurement device, it can deal with a $NO_x$ sensor, an $NH_3$ sensor, or a sensor for measuring the backpressure. Furthermore, the other device can be a means for the injection of ammonia or ammonia precursor solution into the exhaust gas stream.

The first and the second SCR catalytically active compositions $SCR_{first}$ and $SCR_{second}$ each comprise at least one oxide of vanadium supported on titanium dioxide. Such SCR catalyst compositions are known to the skilled person. They are based on titanium dioxide and oxides of vanadium, in particular vanadium pentoxide and vanadium dioxide. The titanium dioxide can be selected from anatase, rutile, brookite, and mixtures thereof. Suitable titanium dioxides comprise at least 95 wt.-% of anatase, preferably at least 98 wt.-%, and even more preferably at least 99.5 wt.-%. The remainder for adding up to 100 wt.-% is preferably represented by rutile and/or brookite, more preferably by rutile. SCR catalyst compositions comprising at least one oxide of vanadium supported on titanium dioxide are hereinafter referred to as "$V/TiO_2$ catalyst compositions".

The $V/TiO_2$ catalyst compositions may additionally contain other oxides, such as those of tungsten, antimony, niobium, molybdenum, cerium, silicon, zirconium and mixtures thereof.

The ratio $V_{first}{:}V_{second}$ of the percentages by weight of vanadium contained in the first to the second $V/TiO_2$ SCR catalytically active composition, each calculated as $V_2O_5$, is from 0.05 to 0.75, preferably from 0.08 to 0.62, more preferably from 0.14 to 0.56.

In embodiments wherein material zones A and B are affixed on the same carrier substrate in the form of a layered arrangement, wherein material zone B is affixed to the carrier substrate, and material zone A is affixed to material zone B as described above, the ratio $V_{first}{:}V_{second}$ of the percentages of vanadium contained in the first to the second $V/TiO_2$ SCR catalytically active composition, each calculated as $V_2O_5$, is preferably from 0.05 to 0.40, more preferably from 0.08 to 0.35.

Optionally, the titanium dioxide support can be doped with $WO_3$ and/or $SiO_2$. In addition or alternatively, $WO_3$ and/or $SiO_2$ can be added as separate oxides to the respective SCR catalytically active composition. In each case, the total amount of $WO_3$ or $SiO_2$ is the sum of the respective doped and separately added oxides.

In one embodiment, the first SCR catalytically active composition comprises 0.5 to 4.0 wt.-% vanadium, and the second SCR catalytically active composition comprises 2 to 8 wt.-% vanadium, in each case calculated as $V_2O_5$ and based on the total weight of the respective SCR catalytically active composition.

In embodiments of the present invention, the first $V/TiO_2$ SCR catalytically active composition comprises 0.5 to 4.0 wt.-% vanadium, preferably 0.5 to 2.5 wt.-%, more preferably 1 to 2 % wt.-%; and optionally 0 to 15 wt.-% tungsten, preferably 4 to 12 wt.-%; and optionally antimony, cerium, niobium and/or molybdenum in amounts of 0 to 8 wt.-% each, preferably 0 to 5 wt.-% each; and optionally 0 to 10 wt.-% of silicon, and optionally 0 to 6 wt.-%, preferably 0 to 3 wt.-% of zirconium; calculated as $V_2O_5$, $WO_3$, $Sb_2O_5$, $CeO_2$, $Nb_2O_5$, MoOa, SiOz and ZrOz and based on the total weight of the first SCR catalytically active composition. The remainder for adding up to a total amount of 100% is represented by TiOz.

The skilled person knows that tungsten stabilizes and promotes the SCR-catalytic activity of vanadium, in particular if the amount of vanadium in an SCR catalyst is rather low. In a preferred embodiment, the first $V/TiO_2$ SCR catalytically active composition consist of oxides of vanadium, tungsten and titanium only, in the amounts given above.

In embodiments of the present invention, the second $V/TiO_2$ SCR catalytically active composition comprises 2 to 8 wt.-% vanadium, preferably 3 to 6 wt.-%; and optionally 0 to 15 wt.-%, preferably 0 to 4 wt.-% tungsten and optionally antimony, niobium and/or molybdenum in amounts of 0 to 8 wt.-% each, preferably 1 to 6 wt.-% each; and optionally 0 to 6 wt.-% , preferably 0 to 4 wt.-% cerium; and optionally 0 to 6 wt.-%, preferably 0 to 3 wt.-% zirconium; and optionally 0 to 10 wt.-% of silicon; calculated as $V_2O_5$, $WO_3$, $Sb_2O_5$, $Nb_2O_5$, MoOS, $CeO_2$, $ZrO_2$ and SiOz and based on the total weight of the second SCR catalytically active composition. The remainder for adding up to a total amount of 100% is represented by TiOz.

In a preferred embodiment, the second $V/TiO_2$ SCR catalytically active composition comprises oxides of vanadium, antimony, tungsten, cerium and titanium only; more preferably, it comprises oxides of vanadium, antimony, tungsten and titanium only; and most preferably, it comprises oxides of vanadium, antimony and titanium only, in the amounts given above.

The amounts of vanadium, titanium, silicon, molybdenum, tungsten, antimony, niobium, tantalum, hafnium, zirconium, cerium can be measured by ICP-AES (inductively coupled plasma atomic emission spectroscopy), ICP-OES (inductively coupled plasma optical emission spectroscopy) or XRF (X-ray fluorescence spectroscopy). Energy-dispersive X-ray spectroscopy, known as EDS, EDX, or EDXS) allows to analyze elements having an atomic number of 8 or larger, thus enable the measurement of the above-mentioned metals and oxygen alike. The skilled person knows how to perform such analyses and can apply this knowledge to the $V/TiO_2$ SCR catalysts according to the present invention without departing from the scope of the claims. It is furthermore common knowledge that many of the metals mentioned above occur in more than one oxidation state. For example, vanadium, antimony and niobium can occur in the oxidation states III and V, and therefore, they can form the oxides $V_2O_3$, $VO_2$, $V_2O_5$, $Sb_2O_3$, $Sb_2o_5$, $Nb_2O_3$ and $Nb_2O_5$. With the methods indicated above, in particular with EDX, the skilled person can easily detect these oxides and convert the result for the oxide of a specific metal in one oxidation state to the corresponding value for the oxide of the same metal in a different oxidation state. The presence of layers can be proven by SEM (scanning electron microscope) images of a cross section, and the layers can be analyzed by EDX analysis (energy-dispersive X-ray analysis).

The first and the second washcoat are affixed to the carrier substrate by layering or zoning in the form of washcoat suspensions using known wash-coating techniques, wherein washcoating can optionally be combined with impregnation as explained below.

In embodiments of the present invention, the washcoat loading of the first and the second washcoat in material zones A and B is, independently from one another, in the range of from 25 to 800g/L, preferably 50 to 500 g/L, even more pref. 100-400 g/L.

The skilled person knows how to optimize the washcoat loading depending on the nature of the carrier substrate (e.g. ceramic flow-through substrate, ceramic wall-flow filter, corrugated substrate, or extruded substrate), its cpsi (cells per square inch) value, the desired pressure drop and the intended application of the catalytic device. He can apply this knowledge without departing from the scope of the claims.

In embodiments wherein material zone A represents the upstream zone, and material zone represents the downstream zone, the volume of the first SCR catalyst is 10 to 90%, preferably 20 to 80%, and more preferably 40 to 60% of the total volume of the first and the second SCR catalyst, and wherein the volume of the second SCR catalyst is 90 to 10%, preferably 80 to 20 %, and more preferably 60 to 40% of the total volume of the first and the second SCR catalyst, and wherein the volumes of the first and the second SCR catalyst add up to 100%.

When preparing the washcoat suspensions, the solid catalyst composition, which is usually present in the form of a powder, is suspended in a liquid medium, preferably water, optionally together with binder(s) and/or stabilizer(s). The washcoat suspension can then be affixed to the carrier substrate or onto the bottom layer. Independently from one another, the washcoat suspensions optionally also contain binders selected from, $SiO_2$, $Al_2O_3$, $ZrO_2$, $CeO_2$, $La_2O_3$ and combinations thereof. Preferably, the binder is present in an amount of 0 to 20 wt.-%, preferably in an amount of 0.1 to 20 wt.-%, more preferably 0.2 to 15 wt.-%, based on the total weight of the respective $V/TiO_2$ SCR catalytically active composition and the binders.

The washcoat suspension may furthermore optionally comprise an additive. The additive may be present together with a binder, as mentioned above, or the washcoat suspension may comprise only a binder or only an additive. Suitable additives are polysaccharides, linear or branched primary or secondary polyhydric alcohols, polyvinylalcohols, aminoalcohols, dialkyl sulfosuccinate salts, glycerol; linear or branched-chain poly-functionalized organic molecules having two or more carbon atoms in the chain, with up to about 12 carbon atoms ($C_n$; wherein $2 \leq n \leq 12$); salts of basic quaternary amines, wherein one or more quaternary amine groups are attached to four carbon chains having length of $C_n$, where $1 \leq n \leq 5$ and wherein the cation is balanced as a salt using, but not limited to, one of the following anions: hydroxide, fluoride, chloride, bromide, iodide, carbonate, sulfate, sulfite, oxalate, maleate, phosphate, aluminate, silicate, borate, or other suitable organic or inorganic counter ions; inorganic bases taken from, but not limited to the following list: lithium hydroxide, sodium hydroxide, potassium hydroxide, magnesium hydroxide, calcium hydroxide, strontium hydroxide, and barium hydroxide; and, simple salts of transition or rare earth elements, including, but not limited to the following: nitrates, carbonates, sulfates, phosphates, borates of rare earth elements from atomic number 57 (La) to 71 (Lu) and including Sc, Y, Ti, Zr, and Hf, as mentioned above.

In one embodiment, the additive is a polysaccharide selected from the group consisting of a galactomannan gum, xanthan gum, guar gum curdlan, Schizophyllan, Scleroglucan, Diutan gum, Welan gum, a starch, a cellulose or an alginate or is derived from a starch, a cellulose (i.e. cellulosic) or an alginate, and mixtures of thereof. Cellulosic additives may be selected from the group consisting of carboxymethyl cellulose, hydroxymethyl cellulose, hydroxyethyl cellulose, methyl cellulose, methyl hydroxyethyl cellulose, methyl hydroxypropyl cellulose and ethyl hydroxyethyl cellulose. Preferably, the polysaccharide is selected from xanthan gum, guar gum or a mixture thereof. Even more preferably the additive is xanthan gum.

In another embodiment, the additive is a dialkyl sulfosuccinate salt. The dialkyl sulfosuccinate can optionally be admixed with a linear or branched primary or secondary polyhydric alcohol.

The washcoat suspension may furthermore additionally comprise pH modifiers, surfactants and/or antifoaming agents. The skilled persons knows suitable pH modifiers, surfactants, antifoaming agents and can apply them without departing from the scope of the claims.

In case the first and/or washcoat suspension comprises an additive, said additive is present in an amount of up to 20 wt.-%, preferably 3 to 15 wt.-%, more preferably 6 to 10 wt.-%, based on the total weight of the oxides, wherein the "total weight of the oxides" is the sum of weights of the metal oxides and, if present, the binder. It will be understood that, if the washcoat suspension does not comprise a binder, the "total weight of the oxides" corresponds to the weight of metal oxides. The first and second suspensions contain the first and second $V/TiO_2$ SCR catalytically active compositions, respectively. The washcoat suspensions for the first and second washcoat, may, independently from one another, only contain the respective $V/TiO_2$ SCR catalyst composition, or the SCR catalyst composition and at least one binder, or the SCR catalyst composition and at least one additive, or the $V/TiO_2$ SCR catalyst composition and at least one binder and at least one additive, each together with at least one solvent, which is preferably water. In one embodiment, the washcoat suspension for the second washcoat comprises the $V/TiO_2$ SCR catalytically active composition, at least one binder, and at least one additive, together with the at least one solvent. Preferably, the washcoat suspension for the second washcoat comprises the $V/TiO_2$ SCR catalytically active composition, at least one binder, and at least one solvent, preferably water, but no additive.

In another embodiment, the washcoat suspension for the first washcoat comprises the $V/TiO_2$ SCR catalyst composition and water, but neither a binder, nor an additive.

In yet another embodiment, the first washcoat suspension for the first washcoat comprises the $V/TiO_2$ SCR catalyst composition and water, but neither a binder, nor an additive; and the washcoat suspension for the second washcoat comprises the $V/TiO_2$ SCR catalyst composition, water, a binder, and optionally an additive.

In all embodiments wherein at least one binder and/or at least one additive are present, the at least one binder and/or at least one additive in the washcoat suspensions for the first and the second washcoat can be identical or different from one another.

When preparing the first and second washcoat suspension, the $V/TiO_2$ SCR catalyst compositions can optionally be milled. The same applies for the binder, if it shall be present in the washcoat. Milling can take place before suspending the $V/TiO_2$ SCR catalyst compositions and/or the binder and/or the additive and/or pH modifiers and/or surfactants and/or antifoaming agents, or afterwards. Milling can, for example, be carried by circular milling in a bead mill, an agitator mill or an agitator bead mill.

Coating a carrier substrate is well known to the skilled person. First, the carrier substrate is oriented such that the channels thereof are substantially vertical. Then, the washcoat suspension is brought into contact with the carrier substrate, either by a bottom-up or a top-down process. In case of a bottom-up process, the carrier substrate is dipped into the washcoat suspension, or the washcoat suspension is pumped into the carrier substrate from the lower end face of the substrate to the upper end face. In case of a top-down process, the washcoat suspension is poured or pumped onto the upper end face of the carrier substrate. In both cases, the application of the washcoat suspension can optionally be performed under vacuum or over-pressure. Furthermore, in both cases, excess washcoat suspension can optionally be removed by applying vacuum or over-pressure.

After the application of the washcoat suspension and, optionally, removal of excess washcoat suspension, the washcoated carrier substrate is dried and calcined.

The procedure described above is repeated to apply the second washcoat, either on the same or on another carrier substrate. If both washcoats shall be applied onto the same carrier substrate, the carrier substrate which has been coated with the first washcoat can be turned 180 degrees so that the former lower end face becomes the new upper end face and vice versa prior to the application of the second washcoat.

In a first embodiment, the first and the second SCR catalyst are present on two different carrier substrates. In this embodiment, both carrier substrates are coated with the respective washcoat by a method comprising the following steps:

a) orienting the carrier substrate such that the channels thereof are substantially vertical,
b) pumping the first washcoat suspension into the carrier substrate from the lower end face over the intended length,
c) sucking out excess first washcoat suspension from the lower end face,
d) drying and calcining the washcoated carrier substrate obtained after step d).

Drying the monolith in steps d) is preferably carried out at a temperature of from 25 to 150°C, preferably from 50 to 90 °C.

Calcining the monolith in step d) is preferably carried out at a temperature of from 300 to 700°C, more preferably from 500 to 600°C.

In a second embodiment, the first and the second washcoat are present on the same carrier substrate. In this embodiment, the carrier substrate is coated consecutively with both washcoats by a method comprising the following steps

a) orienting the carrier substrate such that the channels thereof are substantially vertical,
b) pumping the first washcoat suspension into the carrier substrate from the lower end face over the intended length,
c) sucking out excess first washcoat suspension from the lower end face,
d) drying and calcining the washcoated carrier substrate obtained after step d),
e) orienting the carrier substrate such that the channels thereof are substantially vertical and so that the end face which has been the lower end face in step b) now represents the upper end face,
f) orienting the washcoated carrier substrate obtained after step d) such that the channels thereof are substantially vertical,
g) pouring the second washcoat suspension onto the upper end face of the carrier substrate obtained after step e),
h) applying vacuum at the lower end face of the carrier substrate and soaking the second washcoat suspension applied in step f) through the monolith,
i) drying and calcining the washcoated carrier substrate obtained after step h).

Drying and calcining the monolith in steps d) and h) are is carried out as described above. In step e), the washcoat carrier substrate is oriented such that the channels thereof are substantially vertical. This can mean that the end face which has been the lower end face in step b) also becomes the lower end face in step e). Alternatively, the end face which has been the lower end face in step b) can become the upper end face in step e). This latter option is preferred in case the carrier substrate is a ceramic wall-flow filter.

It is also possible to vary the second embodiment. For example, it is possible to omit step d), which means that drying and calcining are not carried out after the application of the first washcoat, so that steps e) to h) immediately follow step c), and to dry and calcine both washcoats in step i). Furthermore, it is possible to merely dry the washcoat in the step d) and to dry and calcine both washcoats only in step h). It is also possible to pump the second washcoat in step g) from the lower end face side over the intended length. The "intended length" is the zone length of the washcoat. It can be identical with the total axial length of the carrier substrate, or only a part of said length, for example, if both washcoats shall be coated on the same carrier substrate in the form of adjacent zones. Furthermore, the skilled person knows that a washcoat suspension can also be pumped into the carrier substrate from the upper end face, if the coating shall extend over the entire length of the substrate, followed by sucking out excess washcoat from the lower end face. It is also possible to dip a carrier substrate into a washcoat suspension up to the intended length and to subsequently suck out excess washcoat either from the upper or the lower end face.

Optionally, the washcoat suspensions of the $V/TiO_2$ SCR catalytically active compositions do not comprise all the oxides of vanadium and, if desired, additionally tungsten, silicon, molybdenum, antimony, niobium, cerium, tantalum and/or hafnium as mentioned above. In these cases, oxides which have not been applied as components of the washcoat suspension can be applied in a subsequent step, for instance by impregnating the second washcoat with these oxides and/or with precursors thereof. Impregnation can be carried out, for example, by dipping the carrier substrates, which are washcoated with the second washcoat suspension, into an aqueous solution of the precursors of these oxides. Calcination as described above for the first and the second embodiment the method for making the SCR catalytic devices and all alternatives thereof converts precursors of these oxides into the corresponding oxides. Methods of applying $V/TiO_2$ SCR catalytically compositions, including applying a part of the oxides in the form of impregnation, are well known to the skilled person.

Suitable precursor salts of vanadium are ammonium metavanadate and oxalates and tartrates of vanadium.

A suitable precursor salt of tungsten is ammonium metatungstate.

Suitable precursor salts of antimony and niobium are the corresponding sulfates, acetates, tartrates, glycolates and acetylacetonates.

Suitable precursors of cerium are the cerium(III) chloride and cerium(IV) sulfate. Suitable precursors of zirconium are zirconium(IV) chloride, zirconyl(IV) nitrate, zirconyl(IV) sulfate.

A suitable precursor of molybdenum is ammonium heptamolybdate.

These and other precursors are known to the skilled person and can be applied in the context of the present invention without departing from the scope of the claims.

In a preferred embodiment, both the first and the second washcoat suspensions of the $V/TiO_2$ SCR catalytically active compositions comprise all the oxides of vanadium and, if desired, additionally tungsten, silicon, molybdenum, antimony, niobium, cerium, tantalum and/or hafnium as mentioned above, and no precursors are used.

Catalysed substrate monoliths comprising the $V/TiO_2$ SCR catalytically active compositions according to the present invention may be used as such in exhaust purification. Alternatively, they may be coated with catalytically active compositions. Insofar as these materials shall exhibit an SCR catalytic activity, the second $V/TiO_2$ SCR catalytically active compositions mentioned above are suitable materials for said coatings.

In one embodiment, catalytically active carrier materials are manufactured by mixing 10 to 95 wt.-% of at least one inert matrix component and 5 to 90 wt.-% of a catalytically active composition, followed by extruding the mixture according to well-known protocols. As already described above, inert materials that are usually used for the manufacture of catalyst substrates may be used as the matrix components in this embodiment. Suitable inert matrix materials are, for example, silicates, oxides, nitrides and carbides, with magnesium aluminum silicates being particularly preferred. Catalytically active carrier materials obtainable by such processes are known as "extruded catalysed substrate monoliths". In the context of the present invention, an "extruded catalysed substrate monolith" is an extruded monolith wherein the catalytically active composition is a $V/TiO_2$ SCR catalytically active composition as described above.

The application of the catalytically active components onto either the inert carrier substrate or onto a carrier substrate which is catalytically active on its own as well as the application of a catalytically active coating onto a carrier substrate, said carrier substrate comprising a catalyst according to the present invention, can be carried out following manufacturing processes well known to the person skilled in the art, for instance by widely used dip coating, pump coating and suction coating, followed by subsequent thermal post-treatment (calcination).

The skilled person knows that in the case of ceramic wall-flow filters, their average pore sizes and the mean particle size of the catalytically active components according to the present invention may be adjusted to one another in a manner that the coating thus obtained is located onto the porous walls which form the channels of the ceramic wall-flow filter (on-wall coating). However, the average pore sizes and the mean particle sizes are preferably adjusted to one another in a manner that the catalyst according to the present invention is located within the porous walls which form the channels of the ceramic wall-flow filter. In this preferable embodiment, the inner surfaces of the pores are coated (in-wall coating). In this case, the mean particle size of the catalysts according to the present invention has to be sufficiently small to be able to penetrate the pores of the ceramic wall-flow filter. Ceramic wall-flow filters which are coated with an SCR catalytically active compositions are also known as "SDPF" (SCR on DPF, i.e. an SCR catalytically active composition coated onto a diesel particulate filter) or as "SCRF" (SCR on filter). Thus, the present invention encompasses catalysed substrate monoliths wherein the monolith is a ceramic wall-flow filter, and the SCR catalytically compositions comprises SCR catalytically active compositions as described above.

The catalytic devices according to the present invention can be used in systems and methods for the removal of $NO_x$ from combustion exhaust gases. The catalytic devices are applicable in exhaust purification systems of mobile and stationary combustion engines. Mobile combustion engines are, for example, gasoline and diesel engines and also hydrogen internal combustion engines ($H_2$ ICE). The skilled person knows that combustion processes usually take place under oxidizing conditions, and that either fuels comprises nitrogen or nitrogen compounds, which can be oxidized to $NO_x$, and/or that the combustion takes place in the presence of air, wherein the oxygen which is present in the air acts as the oxidant, and at least a part of the nitrogen which is present in can be oxidized to $NO_x$.

Mobile combustion engines can be engines for on-road and off-road applications, for example, gasoline and diesel engines and also hydrogen internal combustion engines for passenger cars, agricultural machinery like agricultural and forestry tractors and harvesting machines, construction wheel loaders, bulldozers, highway excavators, forklift trucks, road maintenance equipment, snow plows, ground support equipment in airports, aerial lifts and mobile cranes.

Stationary combustion engines are, for example, power stations, industrial heaters, cogeneration plants including wood-fired boilers, stationary diesel and gasoline engines, industrial and municipal waste incinerators, industrial drilling rigs, compressors, manufacturing plants for glass, steel and cement, manufacturing plants for nitrogen-containing fertilizers, nitric acid production plants (for example plants applying the Osfiniald process) and ammonia burners for fueling gas turbines of nitric acid production.

In a preferred embodiment, the catalytic devices according to the present invention can be used in a process for the removal of $NO_x$ from automotive combustion exhaust gases, said exhaust gases deriving from diesel or gasoline engines.

It will furthermore be understood that an emissions treatment system for the removal of $NO_x$ emissions from exhaust gases of internal combustion engines, and optionally also for the removal of particulate matter, the system comprising a catalytic device according to the present, may comprise additional catalytic articles, for instance a diesel oxidation catalyst (DOC), another SCR catalyst, an ammonia slip catalyst (ASC), a selective oxidation catalyst (SOC), a catalysed or uncatalysed particulate filter, a passive $NO_x$ adsorber (PNA), and/or a lean $NO_x$ trap (LNT). A catalysed particulate filter may be coated with a diesel oxidation catalyst, thus forming a "catalysed diesel particulate filter (CDPF), or it may be coated with an SCR catalytically active composition, thus forming an SDPF.

In one embodiment of the present invention, the emissions treatment system comprising a catalytic device according to the present invention is arranged in a close-coupled position. A "catalytic device according to the present invention" is the at least one carrier substrate coated with material zones A and B as disclosed above. The term "close-coupled" refers to a position of a catalytic device in an engine's exhaust gas treatment system which is less than 1 meter downstream of the engine's exhaust gas manifold or turbocharger. In a preferred embodiment, the emissions treatment system comprising a catalytic device according to the present invention furthermore comprises one or more particulate filters. In this embodiment, the "first" filter is the filter that is arranged closest to the engine. The "second" filter, if present, is located downstream of the first filter, either directly following the first filter, or in a position further downstream. In this embodiment, the catalytic device according to the present invention, which is arranged in a close-coupled position, is arranged upstream of the first filter.

As mentioned above, the catalytic device according to the present invention can be a ceramic flow-through substrate, a ceramic wall-flow filter, a corrugated substrate, a wound or packed fiber filter, an open cell foam or a sintered metal filter. Preferably, it is a ceramic flow-through substrate, a ceramic wall-flow filter or a corrugated substrate. If the catalytic device according to the present invention is a ceramic wall-flow filter, it deals with an SDPF.

In yet another embodiment of the present invention, the emissions treatment system is arranged in an underfloor position. Underfloor catalyst members are also known in the prior art and are located downstream of any close-coupled and/or medium- coupled catalysts under the floor of the vehicle adjacent to or in combination with the vehicle's muffler. In this embodiment, the catalytic device according to the present invention is arranged downstream the first filter. The substrates catalytic device according to the present invention are the same as those mentioned above for the close-coupled arrangement.

In yet another embodiment of the present invention, a carrier substrate onto which a zeolite, which is promoted with copper and optionally one or two additional metals, is affixed, is located directly downstream of the catalytic device according to the present invention. The carrier substrate is preferably selected from ceramic flow-through substrates, ceramic wall-flow filters, corrugated substrates or extruded substrates, and the zeolite is preferably a small-pore aluminosilicate zeolite.

Suitable small-pore zeolites, which have a maximum pore size of eight tetrahedral atoms as explained above, are, for instance, ACO, AEI, AEN, AFN, AFT, AFX, ANA, APC, APD, ATT, BIK, CDO, CHA, DDR, DFT, EAB, EDI, EPI, ERI, ESV, ETL, GIS, GOO, IHW, ITE, ITW, LEV, KFI, MER, MON, NSI, OWE, PAU, PHI, RHO, RTH, SAT, SAV, SIV, THO, TSC, UEI, UFI, VNI, YUG, ZON and mixtures and intergrowths thereof.

In a preferred embodiment of the present invention, the small-pore zeolites are chosen from AEI, AFT, AFX, CHA, DDR, ERI, ESV, ETL, KFI, LEV, UFI and mixtures and intergrowths thereof. In a more preferred embodiment, the zeolites are selected from AEI, CHA, AFX, LEV, ERI and mixtures and intergrowths that contain at least one of these framework types. Even more preferred, the zeolites are chosen from AEI and CHA and mixtures and intergrowths that contain at least one of these framework types. In a particularly preferred embodiment, the zeolite is AEI. In another particularly preferred embodiment, the zeolite is CHA.

An "intergrowth" of a zeolite comprises at least two different zeolite framework types or two different zeolite compositions of the same framework type.

In an "overgrowth" zeolite, one framework structure grows on top of the other one. Thus, "overgrowth" represents a species of "intergrowth", and "intergrowth" is the genus.

If the small-pore zeolite has the CHA framework type, this comprises all zeotypes having the CHA framework type, provided that they are crystalline aluminosilicates. Such zeotypes are, for example, SSZ-13, LZ-218, Linde D, Linde R, Phi, ZK-14, with SSZ-13 being preferred.

If the small-pore zeolite has the AEI framework type, this comprises all zeotypes having the AEI framework type, provided that they are crystalline aluminosilicates. Such zeotypes are, for instance, SSZ-39 and SIZ-8.

If the small-pore zeolite has the AFX framework type, this comprises all zeotypes having the AFX framework type, provided that they are crystalline aluminosilicates. Such a zeotype is, for instance, SSZ-16.

If the small-pore zeolite has the LEV framework type, this comprises all zeotypes having the LEV framework type, provided that they are crystalline aluminosilicates. Such zeotypes are, for instance, ZK-20, LZ-132 and Nu-3.

If the small-pore zeolite has the ERI framework type, this comprises all zeotypes having the ERI framework type, provided that they are crystalline aluminosilicates. Such zeotypes are, for instance, LZ-220, UZM-12 and SSZ-98.

The small-pore zeolite has a molar ratio of silica-to-alumina (SAR) value of 5 to 50, preferably 6 to 40, more preferably 7 to 30.

The at least one small-pore zeolite is metal-promoted. In embodiments of the present invention, the small-pore zeolite is promoted with copper and optionally with one or two additional metals M1 and M2. The copper to aluminum atomic ratio in these zeolites is from 0.12 to 0.55, and the copper content is from 2.0 to 6.5 wt.-%, calculated as CuO and based on the total weight of the zeolite. If promoter metals M1 and M2 are present, they are, independently from one another, selected from magnesium, calcium, barium, strontium, yttrium, titanium, zirconium, niobium, manganese, iron, zinc, silver, lanthanum, cerium, praseodymium, neodymium, promethium, samarium, europium, gadolinium, terbium, dysprosium, holmium, erbium, thulium, ytterbium and lutetium, provided that, if both M1 and M2 are present, they are different from one another.

In one embodiment, copper is the only promoter metal, and the Cu:Al atomic ratio is from 0.12 to 0.55.

In embodiments wherein only one promoter metal M1 is present in addition to copper, the M1:Cu atomic ratio is in the range of 0.05 to 0.95, and the (Cu + M1) : Al atomic ratio is in the range of 0.11 to 0.96.

In embodiments wherein two promoter metals M1 and M2 are present in addition to copper, the M1:Cu ratio and the M2:Cu atomic ratio are both in the range of 0.05 to 0.95, and the (Cu + M1 + M2) : Al atomic ratio is in the range of 0.2 to 0.80, under the proviso that M1 and M2 are different from one another.

As mentioned above, the copper content in all these embodiments is from 2.0 to 6.5 wt.-% calculated as CuO and based on the total weight of the zeolite.

In one embodiment, the at least one small-pore zeolite is promoted with copper and a metal M1 which is manganese, but not with a metal M2. In this embodiment, the small-pore zeolite comprises 2.0 to 6.5 wt.-% copper, calculated as CuO and based on the total weight of the zeolite, and the Cu : Al molar ratio is from 0.12 to 0.40. The (Cu + Mn) : Al molar ratio ranges from 0.11 to 0.96. In this embodiment, the preferred SAR value is from 7 to 30. The small-pore zeolite preferably has a CHA framework type. More preferably, the zeolite has a CHA framework type and a SAR value of from 7 to 30. Such small-pore zeolites are disclosed in PCT/EP2023/057506, which is incorporated herein by reference.

In another embodiment, the at least one small-pore zeolite is promoted with copper and two additional metals. In this embodiment, the small-pore zeolite comprises at least 2.0 wt.-% copper, calculated as CuO and based on the total weight of the zeolite, and the Cu : Al molar ratio is from 0.12 to 0.55. The first additional metal M1 is manganese, and the Mn : Cu atomic ratio is from 0.05 to 0.95. The second additional metal M2 is selected from magnesium, calcium, barium, strontium, yttrium, titanium, zirconium, niobium, iron, zinc, silver, lanthanum, cerium, praseodymium, neodymium, promethium, samarium, europium, gadolinium, terbium, dysprosium, holmium, erbium, thulium, ytterbium, lutetium and mixtures thereof, and the M2:Cu atomic ratio is from 0.05 to 0.80. The sum of the atomic ratios of the metals Cu, Mn and M2 to aluminum; (Cu + Mn + M2) : Al is from 0.20 to 0.80. The at least one small-pore zeolite preferably has as framework type selected from AEI, CHA, AFX and LEV and a SAR value of 5 to 50, preferably 6 to 30, more preferably 7 to 25. Most preferably, the small-pore zeolite has a CHA or AEI framework and is promoted with copper, manganese, and a metal M2 selected from Fe, and Sm.

Such small-pore zeolites are disclosed in PCT/EP2023/057507, which is incorporated herein by reference.

In yet another embodiment, the at least one small-pore zeolite is promoted with copper and two additional metals. In this embodiment, the small-pore zeolite comprises at least 2.0 wt.-% copper, calculated as CuO and based on the total weight of the zeolite, and the Cu : Al molar ratio is from 0.12 and 0.55. The first additional metal M1 is selected from calcium, magnesium or strontium, wherein the M1 : Cu atomic ratio is from 0.10 and 0.92. The second additional metal M2 is selected from magnesium, calcium, barium, strontium, yttrium, titanium, zirconium, niobium, iron, zinc, silver, lanthanum, cerium, praseodymium, neodymium, promethium, samarium, europium, gadolinium, terbium, dysprosium, holmium, erbium, thulium, ytterbium, lutetium and mixtures thereof. The M2 : Cu atomic ratio is from 0.05 and 0.80; and M1 and M2 are different from one another. In this embodiment, the small-pore zeolite does not comprise manganese. The sum of the atomic ratios of copper, metal M1 and metal M2 to aluminum, (Cu + M1 + M2) : Al, is from 0.20 to 0.80. The small-pore zeolite preferably has as framework type selected from AEI, CHA, AFX and LEV and a SAR value of 5 to 50, preferably 6 to 30, more preferably 7 to 25. Most preferably, the small-pore zeolite has a CHA or AEI framework and is promoted with copper, a metal M1 which is calcium, and a metal M2 selected from Fe, and Sm. Such small-pore zeolites are disclosed in PCT/EP2023/057509, which is incorporated herein by reference.

It is possible to use only one metal-promoted small-pore zeolite or mixtures or at least two metal-promoted small-pore zeolites. In the latter case, the at least two metal-promoted small-pore zeolites can be selected from all embodiments described above. Furthermore, if at least two metal-promoted small-pore zeolites containing copper are used, they are different from one another.

This means that they differ from one another in at least one of the following features:

- they have different framework structures and/or
- they belong to the same framework structure, but represent different zeotypes, and/or
- they have different SAR values, and/or

- their Cu:Al atomic ratios are different, and/or
- they contain different metals M1 and M2, in case M2 is present, and/or,
- they all contain only a metal M1, but not a metal M2, and the metal M1 is the same in all zeolites, but the ratios (Cu+M1):Al are different, and/or
- they contain the same metals M1 and M2, but the atomic ratios of the individual metals copper, M1 and M2, (Cu+$M_{total}$):Al, are different.

In a preferred embodiment, only one metal promoted small pore zeolite, selected form the zeolites promoted with copper only or with copper and a metal M1, or with copper and metals M1 and M2, as described above, is used.

In yet another embodiment of the present invention, the emissions treatment system comprising a catalytic device according to the present invention is arranged upstream of the first particulate filter, but 1 meter or more downstream of the engine's exhaust gas manifold or turbocharger. In this embodiment, the catalytic device according to the present invention preferably is the first brick downstream of the engine's exhaust gas manifold or turbocharger.

In yet another embodiment of the present invention, the emissions treatment system comprising a catalytic device according to the present invention is arranged downstream of the first particulate filter.

In these embodiments wherein the catalytic device according to the present invention is located either upstream or downstream of the first particulate filter, the catalytic devices according to the present invention are the same as those mentioned above for the close-coupled arrangement and the underfloor arrangement.

In all emissions treatment systems described above, face side A of the catalytic device according to the present invention is positioned upstream, and face side B is positioned downstream.

The present invention furthermore provides a method for the removal of $NO_x$ emissions from exhaust gases of internal combustion engines, and optionally also for the removal of particulate matter, the method comprising, in the following order, from upstream to downstream:

a) injecting ammonia or an ammonia precursor solution into the exhaust gas stream,
b) introducing the exhaust gas from step a) into a catalytic device for the removal of nitrogen oxides from the exhaust gas of combustion engines according to the present invention.

Optionally, the exhaust gas is subsequently introduced into a carrier substrate onto which a zeolite, which is promoted with copper and optionally one or two additional metals, is affixed, is located directly downstream of the catalytic device according to the present invention.

In embodiments of the method according to the present invention, the internal combustion engine is selected from gasoline, diesel, CNG (compressed natural gas), alcohol-fueled and hydrogen internal combustion engines ($H_2$-ICE). Preferred alcohols are methanol, ethanol, propanol and butanol.

**Brief description of the Drawings**

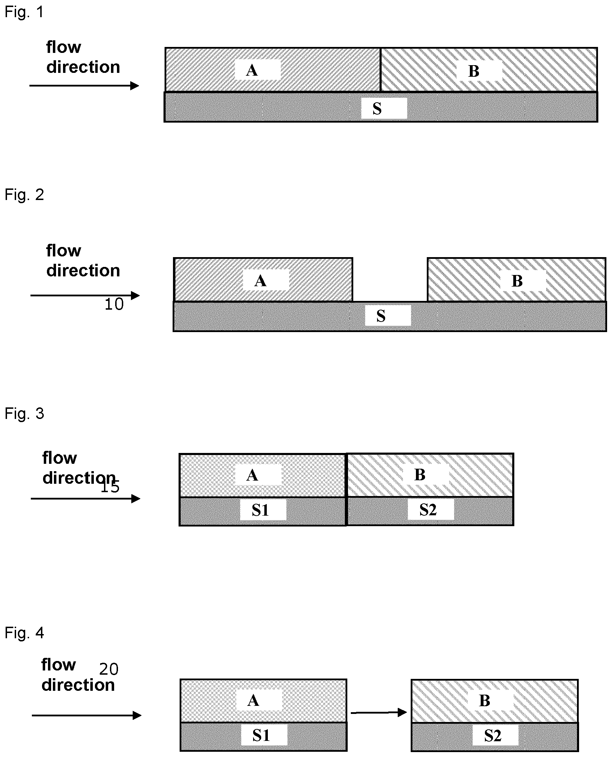

Fig. 1 shows an arrangement wherein material zones A and B are applied directly adjacent to each other, but without overlapping, in the form of zones onto one single carrier substrate (S). S is a ceramic flow-through substrate or a corrugated substrate.

Fig. 2 shows an arrangement wherein material zones A and B are applied onto the carrier substrate in the form of zones, with a gap between the two zones.

Fig. 3 shows an arrangement wherein material zone A and B are applied directly adjacent to each other, but on two carrier substrates S1 and S2. S1 and S2 can, independently from one another, be selected from ceramic flow-through substrates and corrugated substrates.

Fig. 4 shows an arrangement wherein material zone A and B are applied directly one after another, but with a distance from each other; and on two carrier substrates S1 and S2.. S1 and S2 can, Independently from one another, be selected from ceramic flow-through substrates and corrugated substrates.

Fig. 5 shows an arrangement wherein material zone A and B are applied directly one after another, but with a distance from each other; and on two carrier substrates S1 and S2. S1 and S2 can, Independently from one another, be selected from ceramic flow-through substrates and corrugated substrates. Furthermore, there is another device (OD) located between them. Said other device can be, for example, another SCR, an SDPF, a $NO_x$ sensor, an NH3

sensor, or a sensor for measuring the backpressure, or a means for the injection of ammonia or an ammonia precursor solution into the exhaust gas stream.

Fig. 6 shows a layered arrangement wherein material zone B is affixed on the carrier substrate, and material zone A is affixed on top of material zone B.

Fig. 7 shows a filter (1) wherein material zone A is affixed on the inlet channels, and material zone B is affixed on the outlet channels. The channels of the filter are alternatingly plugged (2) at the inlet or the outlet end.

Fig. 8 shows a combination of an upstream first filter (1), wherein material zone A is affixed to the inlet channels, and a downstream second filter (3), wherein material zone B is affixed to the outlet channels. The channels of both filters are alternatingly plugged (2) at the inlet or the outlet end.

Fig. 9 shows a combination of an upstream filter (1), wherein material zone A is affixed to the inlet channels, and a downstream second catalytic device (4), wherein material zone B is affixed onto the carrier substrate S2. Carrier substrate S2 can, for example be a ceramic flow-through substrate made of cordierite, or a corrugated substrate or can be extruded.

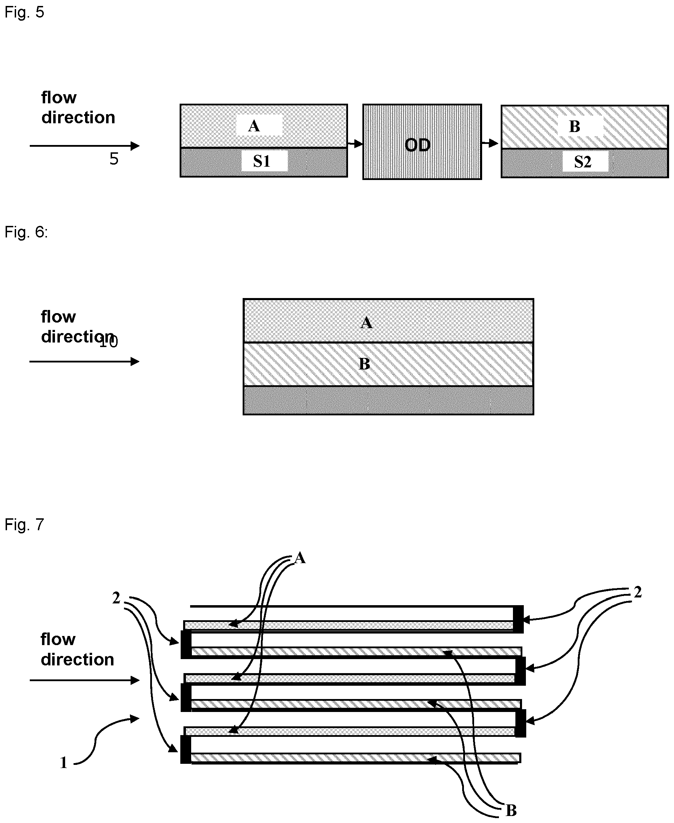

In figs. 7, 8 and 9, the washcoat coating is shown only on one side of each inlet and outlet channel for reasons of clarity. The skilled person knows that in reality the entire inner walls of the inlet and outlet ducts are coated.

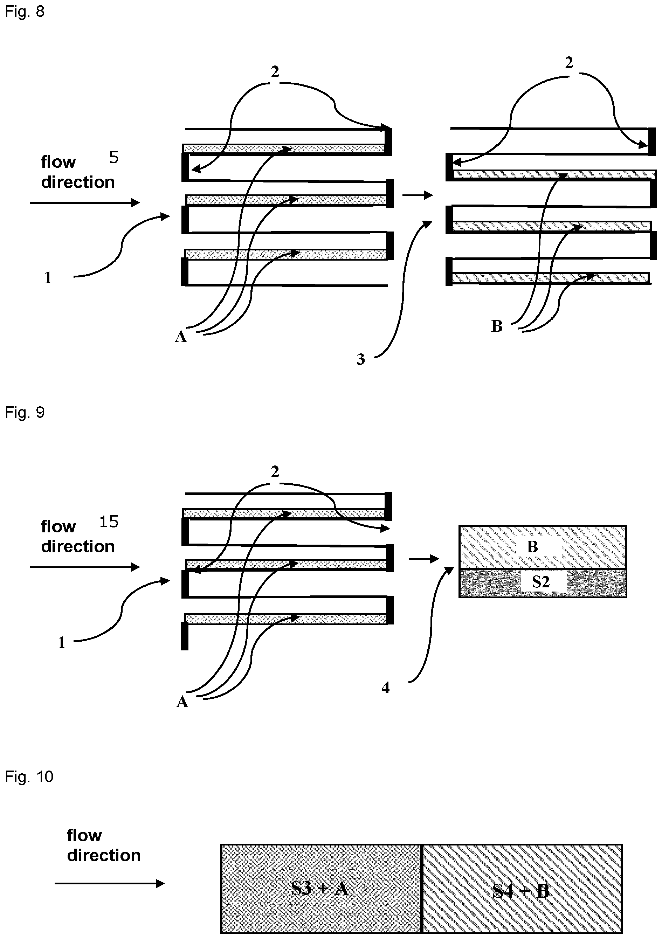

Fig. 10 shows an arrangement wherein two catalytic devices, consisting of extruded substrates, are arranged directly adjacent to each other. The first, upstream device is extruded from a slurry comprising the first substrate material (S3) and the components of material zone A. The second, downstream device is extruded from a slurry comprising the second substrate material (S4) and the components of material zone B.

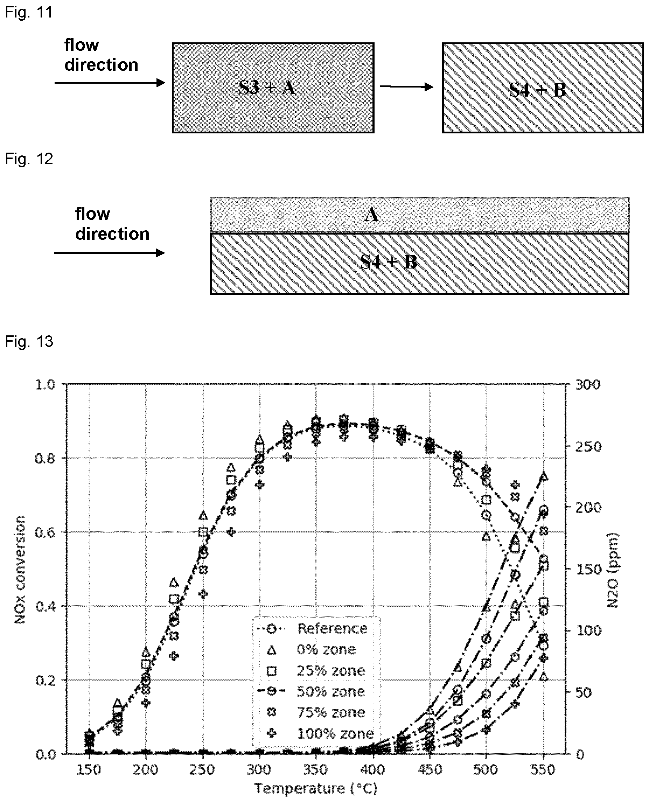

Fig. 11 shows an arrangement wherein two catalytic devices, consisting of extruded substrates, are arranged with a gap between them. The first, upstream device is extruded from a slurry comprising the first substrate material (S3) and the components of material zone A. The second, downstream device is extruded from a slurry comprising the second substrate material (S4) and the components of material zone B.

Fig. 12 shows an arrangement wherein a catalytic device wherein material zone A is affixed to an extruded substrate. The extruded substrate consists of a substrate material S4 and the components of material zone B.

In Example 2, catalyst compositions comprising 3 wt.-% (high vanadium), 2 wt.-% (low vanadium) and 2.5 wt.-% $V_2O_5$ (reference) were made. Corrugated substrates were coated via impregnation with a low vanadium and a high vanadium zone and measured against a corrugated substrate which was coated with the reference catalyst over 100% of its length. The volume of the low vanadium zone in the zoned catalysts is indicated as 0, 25, 50, 75 and 100% of the volume calculated as the sum of low vanadium zone and high vanadium zone. The results of the measurements are shown in Fig. 13 to 15:

Figure 13 shows the $NO_x$ conversion and $N_2O$ formation in ppm as a function of the respective % zone. The dotted line represents the $NO_x$ conversion of the reference. The dashed line represents the 50% zone which has the same overall metal composition as the reference. The dotted dashed line shows the amount of $N_2O$ in ppm.

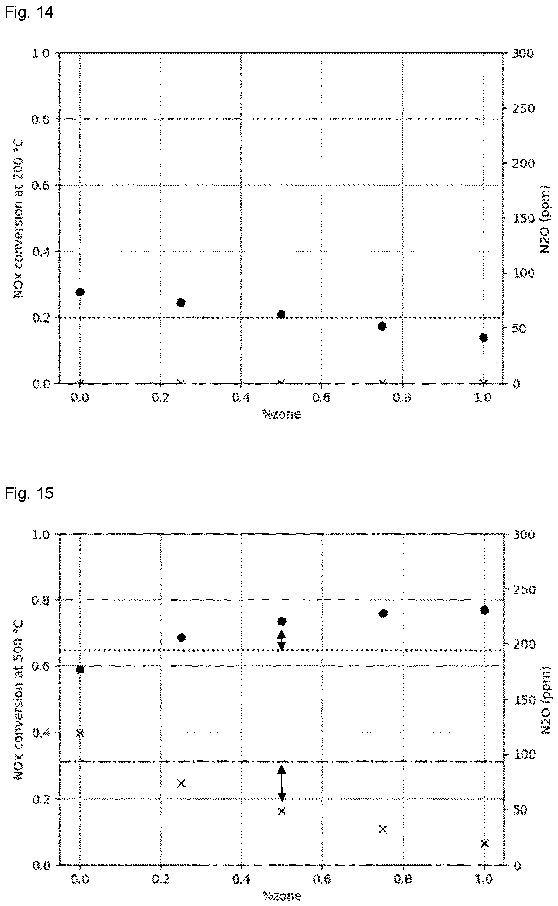

Figure 14 shows the $NO_x$ conversion (circles) and the $N_2O$ formation in ppm (crosses) at 200°C as a function of the %zone. The dotted line represents the $NO_x$ conversion at 200°C for the reference. $NO_x$ conversion at 200°C for the 50% zone is similar to the conversion of the reference. The $N_2O$ formation was zero for all samples, including the reference.

Figure 15 shows the $NO_x$ conversion (circles) and $N_2O$ formation in ppm (crosses) at 500°C as a function of the respective %zone. The dotted line and dotted dashed line are $NO_x$ conversion and $N_2O$ yield of the reference, respectively. It has to be noted that the $NO_x$ conversion at 500°C for the 50% zone is significantly higher than the reference, while $N_2O$ emissions are lower than for the reference.

In Example 3, catalyst composition comprising 2 wt.-% (low vanadium) and 5 wt.-% (high vanadium) were made. Substrates comprising different zone lengths of both composition were made, and their $NO_x$ conversion and $N_2O$ yield was measured. "%zone" indicates the volume of the upstream zone having a low vanadium content over the volume of the sum of upstream and downstream zone.

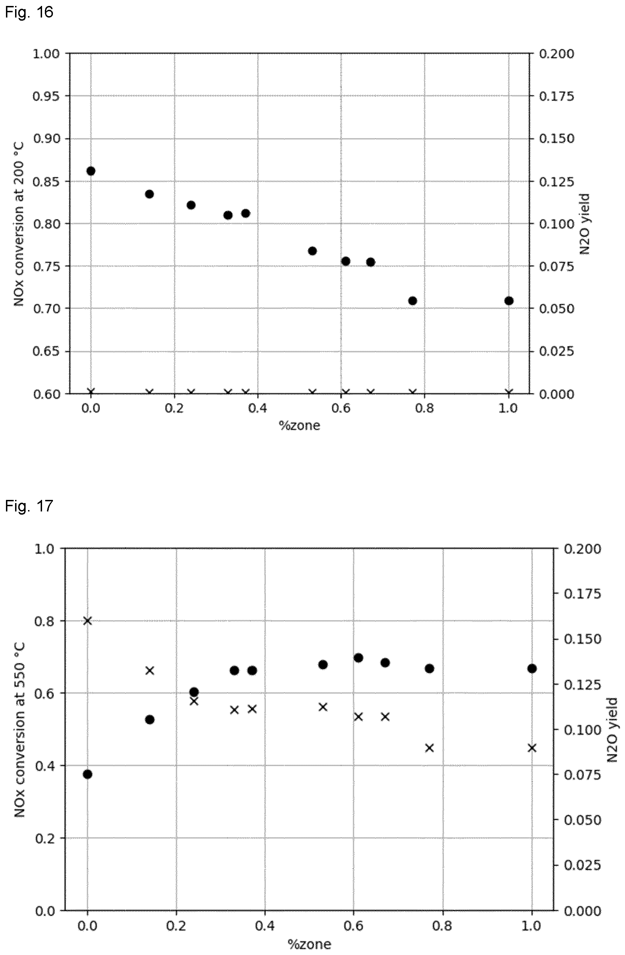

Fig. 16 shows the $NO_x$ conversion (circles) and $N_2O$ yield (crosses) at 200°C as a function of the %zone.

Fig. 17 shows the $NO_x$ conversion (circles) and $N_2O$ yield (crosses) at 550°C as a function of the %zone.

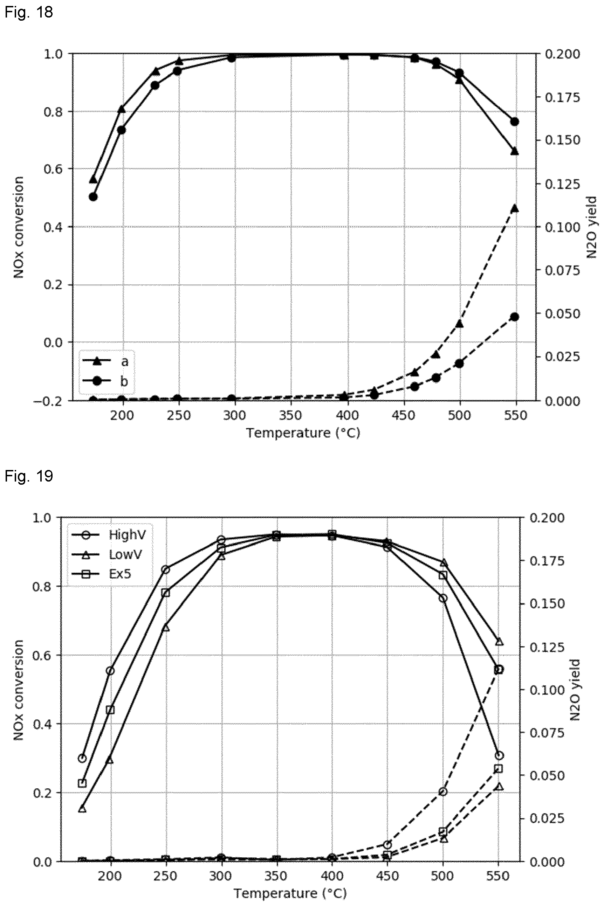

Fig. 18 shows the $NO_x$ conversion (solid line) and $N_2O$ yield (dashed line) as a function of the amount of $V_2O_5$ and $WO_3$ in the low vanadium zone. Circles: Example 4a; triangles: Example 4b.

Fig. 19 shows the $NO_x$ conversion (solid line) and $N_2O$ yield (dashed line) of the zoned arrangement with two adjacent carrier substrates according to Example 5.

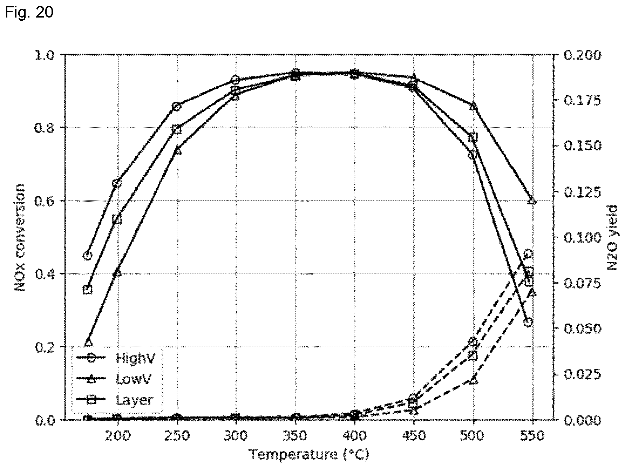

Fig. 20 shows the $NO_x$ conversion (solid line) and $N_2O$ yield (dashed line) of the layered arrangement according to Example 6 and of the two Comparative Example having one washcoat with a high vanadium (HighV) or low vanadium (LowV) content only.

## Embodiments

### Example 1: Powder data of catalytically active compositions comprising vanadium and TiO$_2$ only

Catalytically active compositions comprising vanadium, calculated as $V_2O_5$, and TiOz only are hereinafter referred to as "V only".

"Low vanadium" and "LowV" refer to the first $V/TiO_2$ SCR catalytically active composition having a percentage by weight of vanadium $V_{first}$, calculated as $V_2O_5$, as defined above.

Accordingly, "high vanadium" and "HighV" refer to the second $V/TiO_2$ SCR catalytically active composition having a percentage by weight of vanadium $V_{second}$, calculated as $V_2O_5$, as defined above.

### Example 1a: V only (2 and 4 wt% of $V_2O_5$)

A catalyst powder A of the composition 98 wt% TiOz as a carrier and 2 wt% $V_2O_5$, was produced as follows: Commercially available TiOz (anatase) in powder form was placed in a beaker. Then an aqueous solution of vanadium oxalate was dropwise added in the appropriate quantity under constant mixing. The powder thus obtained was dried at 80°C and calcined at 550°C.

A catalyst powder B of the composition 96 wt% TiOz as a carrier and 4 wt% $V_2O_5$, was produced as follows: Commercially available TiOz (anatase) in powder form was placed in a beaker. Then an aqueous solution of vanadium oxalate was dropwise added in the appropriate quantity under constant mixing. The powder thus obtained was dried at 80°C and calcined at 550°C.

To produce a catalyst according to the invention, the powders A and B were pelletized and placed in a quartz glass reactor tube forming two reactor beds of 150 mg each, separated by quartz wool, in a way that the gas contacted first powder A, and then powder B.

To produce a comparative catalyst (Comparative Example 1, CE1), pelletized powders A and powder B were mixed in equal parts, and then a reactor tube was filled with 300 mg of this mixture.

Catalysts were tested in a fresh state between 175°C and 550°C, with a gas flow of 50 Uh, containing 500 ppm NO, 600 ppm $NH_3$, 5% O2 and 4% $H_2O$.

The comparison of Example 1a and Comparative Example 1 clearly shows that Example 1a provides a better $NO_x$ conversion and a lower $N_2O$ formation at 550°C, although both samples have the same overall chemical composition, which means that they comprise the same overall vanadium content and the same physical properties as regards the $TiO_2$ crystalline phase and the surface area.

The improvement at high temperature of Example 1a can be rationalized considering that at high temperature $NO_x$ conversion is related more to the selectivity of the catalyst than to the volume of the catalyst. It can therefore be assumed that at 550°C, most of the $NO_x$ and $NH_3$ react in the low vanadium zone, leaving little to no $NH_3$ left at the inlet of the second zone. The present invention thus enables to boost high temperature $NO_x$ conversion of $V/TiO_2$ SCR based catalysts by the zone concept, without a significant decrease of low temperature NOx conversion.

The $NO_x$ conversion and the $N_2O$ formation are shown in Tables 1 and 2:

**Table 1: % NO$_x$ conversion as a function of temperature for Example 1a (Ex 1a) and Comparative Example 1 (CE1)**

| %NO$_X$ conversion as a function of temperature | | | | | | | | | |
|---|---|---|---|---|---|---|---|---|---|
| | 175°C | 200°C | 250°C | 300°C | 350°C | 400°C | 450°C | 500°C | 550°C |
| Ex 1a | 17.1 | 31.6 | 67.4 | 88.5 | 95.1 | 96.3 | 93.6 | 79.1 | 50.4 |
| CE1 | 18.7 | 34.1 | 71.5 | 91.7 | 97.1 | 987.0 | 95.4 | 69.8 | 13.6 |

**Table 2: N$_2$O formation in ppm as a function of temperature for Example 1a (Ex 1a) and Comparative Example 1 (CE1)**

| N$_2$O (ppm) as a function of Temperature | | | | | | | | | |
|---|---|---|---|---|---|---|---|---|---|
| | 175°C | 200°C | 250°C | 300°C | 350°C | 400°C | 450°C | 500°C | 550°C |
| Ex 1a | 0.19 | 0.24 | 0.30 | 0.43 | 0.72 | 1.90 | 6.87 | 19.53 | 38.19 |
| CE1 | 0.21 | 0.22 | 0.21 | 0.50 | 1.09 | 3.86 | 15.08 | 44.23 | 69.73 |

Example 1b: Catalyst compositions with 3 and 4.4 wt% of V$_2$O$_5$

A catalyst powder C of the composition 91.5 wt% TiOz as a carrier and 3.0 wt% V$_2$O$_5$, 4 wt% WO$_3$ and 1.5 wt% Sb$_2$O$_5$ was produced as follows: Commercially available TiOz (anatase) in powder form was placed in a beaker. Then an aqueous solution containing vanadium oxalate, ammonium metatungstate, antimony glycolate and tartaric acid was dropwise added in the appropriate quantity under constant mixing. The powder thus obtained was dried at 80°C and calcined at 550°C.

A catalyst powder D of the composition 90.1 wt% TiOz as a carrier and 4.4 wt% V$_2$O$_5$, 4 wt% WO$_3$ and 1.5 wt% Sb$_2$O$_5$ was produced as follows: Commercially available TiOz (anatase) in powder form was placed in a beaker. Then an aqueous solution containing vanadium oxalate, ammonium metatungstate, antimony glycolate and tartaric acid was dropwise added in the appropriate quantity under constant mixing. The powder thus obtained was dried at 80°C and calcined at 550°C.

To produce a catalyst according to the invention, the powders C and D were pelletized and placed in a quartz glass reactor tube forming two reactor beds of 150 mg each, separated by quartz wool, in a way that the gas contacted first powder C, and then powder D.

To produce a comparative catalyst, pelletized powder C and powder D were mixed in equal amounts, and then a reactor tube was filled with 300 mg of this mixture.

Catalysts were tested in a fresh state between 175°C and 550°C, with a gas flow of 100 Uh, containing 500 ppm NO, 600 ppm NH$_3$, 5% O$_2$ and 4% H$_2$O.

The NO$_x$ conversion and the N$_2$O formation are shown in Tables 3 and 4:

The comparison of Example 1b and Comparative Example 2 clearly shows that Example 1b provides a better NO$_x$ conversion and a lower N$_2$O formation at 550°C, although both samples have the same overall chemical composition, which means that they comprise the same overall vanadium content and the same physical properties as regards the TiOz crystalline phase and the surface area.

The improvement at high temperature of Example 1b can be rationalized by the same considerations as above for Example 1a.

**Table 3: % NO$_x$ conversion as a function of temperature for Example 1b (Ex 1b) and Comparative Example 2 (CE2)**

| %NO$_X$ conversion as a function of temperature | | | | | | | | | |
|---|---|---|---|---|---|---|---|---|---|
| | 175°C | 200°C | 250°C | 300°C | 350°C | 400°C | 450°C | 500°C | 550°C |
| Ex 1b | 16.3 | 33.2 | 72.3 | 93.3 | 98.6 | 99.3 | 97.8 | 84.3 | 43.2 |
| CE2 | 15.5 | 31.5 | 70.4 | 91.8 | 97.8 | 98.7 | 96.4 | 76.8 | 21.6 |

**Table 4: N$_2$O formation in ppm as a function of temperature for Example 1b (Ex 1b) and Comparative Example 2 (CE2)**

| N$_2$O (ppm) as a function of temperature | | | | | | | | | |
|---|---|---|---|---|---|---|---|---|---|
| | 175°C | 200°C | 250°C | 300°C | 350°C | 400°C | 450°C | 500°C | 550°C |
| **Ex 1b** | 0.21 | 0.20 | 0.34 | 0.46 | 0.68 | 1.82 | 7.36 | 24.14 | 48.70 |
| **CE2** | 0.23 | 0.22 | 0.34 | 0.48 | 0.92 | 2.94 | 11.90 | 37.63 | 67.33 |

Example 1c: Catalyst compositions with 1 and 5 wt% of V$_2$O$_5$

A catalyst powder E of the composition 93.5 wt% TiOz as a carrier and 1.0 wt% V$_2$O$_5$, 4 wt% WO$_3$ and 1.5 wt% Sb$_2$O$_5$ was produced as follows: Commercially available TiOz (anatase) in powder form was placed in a beaker. Then an aqueous solution containing vanadium oxalate, ammonium metatungstate, antimony glycolate and tartaric acid was dropwise added in the appropriate quantity under constant mixing. The powder thus obtained was dried at 80°C and calcined at 550°C.

A catalyst powder F of the composition 89.5 wt% TiOz as a carrier and 5.0 wt% V$_2$O$_5$, 4 wt% WO$_3$ and 1.5 wt% Sb$_2$O$_5$ was produced as follows: Commercially available TiOz (anatase) in powder form was placed in a beaker. Then an aqueous solution containing vanadium oxalate, ammonium metatungstate, antimony glycolate and tartaric acid was dropwise added in the appropriate quantity under constant mixing. The powder thus obtained was dried at 80°C and calcined at 550°C.

To produce a catalyst according to the invention, the powders E and F were pelletized and placed in a quartz glass reactor tube forming two reactor beds of 150 mg each, separated by quartz wool, in a way that the gas contacted first powder E, and then powder F.

To produce a comparative catalyst, pelletized powder E and powder F were mixed in equal amounts, and then a reactor tube was filled with 300 mg of this mixture.

Catalysts were tested in a fresh state between 175°C and 550°C, with a gas flow of 80 Uh, containing 500 ppm NO, 600 ppm NH$_3$, 5% O$_2$ and 4% H$_2$O.

The NO$_x$ conversion and the N$_2$O formation are shown in Tables 5 and 6:

The comparison of Example 1c and Comparative Example 3 clearly shows that Example 1c provides a better NO$_x$ conversion and a lower N$_2$O formation at 550°C, although both samples have the same overall chemical composition, which means that they comprise the same overall vanadium content and the same physical properties as regards the TiOz crystalline phase and the surface area.

The improvement at high temperature of Example 1c can be rationalized by the same considerations as above for Example 1a.

**Table 5: % NO$_x$ conversion as a function of temperature for Example 1c (Ex 1c) and Comparative Example 3 (CE3)**

| %NOx conversion as a function of temperature | | | | | | | | | |
|---|---|---|---|---|---|---|---|---|---|
| | 175°C | 200°C | 250°C | 300°C | 350°C | 400°C | 450°C | 500°C | 550°C |
| **Ex 1c** | 11.7 | 23.1 | 54.1 | 80.0 | 92.3 | 95.6 | 93.5 | 78.8 | 45.0 |
| **CE3** | 13.5 | 25.3 | 55.9 | 80.0 | 91.1 | 94.1 | 91.6 | 70.0 | 8.4 |

**Table 6: N$_2$O formation in ppm as a function of temperature for Example 1c (Ex 1c) and Comparative Example 3 (CE3)**

| N$_2$O (ppm) as a function of temperature | | | | | | | | | |
|---|---|---|---|---|---|---|---|---|---|
| | 175°C | 200°C | 250°C | 300°C | 350°C | 400°C | 450°C | 500°C | 550°C |
| **Ex 1c** | 0.17 | 0.22 | 0.30 | 0.49 | 0.71 | 1.78 | 6.65 | 20.69 | 37.32 |
| **CE3** | 0.22 | 0.21 | 0.29 | 0.46 | 0.85 | 2.76 | 10.77 | 34.05 | 50.89 |

**Example 2: Variation of the zone volume of material zone B**

A water-based slurry containing $TiO_2$ (anatase) having a dry matter content of 57 to 59 wt.-% was applied on a corrugated substrate with a cpsi of 260, wherein "cpsi" stands for "cells per square inch". The substrate was dried at room temperature and then calcined at 580 °C. Subsequently, impregnation solutions were prepared by mixing a water-based solution containing vanadyl oxalate (7.15 % V), an aqueous solution of ammonium metatungstate (39.36% W), deionized water, tartaric acid and grams of antimony acetate in different amounts. The substrate was then dipped into the impregnation solution for 20 seconds, dried and then thermally treated at 450 °C resulting in a catalytic load of 400 g/l and $\%V_2O_5$, $\%WO_3$, $\%Sb_2O_5$ of:

high vanadium catalyst: $3\%\ V_2O_5$, $3.75\%\ WO_3$, $2.00\%\ Sb_2O_5$

low vanadium catalyst: $2.0\%\ V_2O_5$, $3.75\%\ WO_3$, $2.00\%\ Sb_2O_5$

reference: $2.5\%\ V_2O_5$, $3.75\%\ WO_3$, $2.00\%\ Sb_2O_5$

Bricks of low vanadium catalyst (material zone A) and high vanadium catalyst (material zone B) were combined in various volumes to obtain a catalyst of 3" length.

$$\%zone\ volume_{LV} = \frac{Volume_{LV}}{Volume_{LV} + Volume_{HV}} \times 100$$

where $Volume_{LV}$ is the volume of low vanadium zone and $Volume_{HV}$ is the volume of the high vanadium zone. If the low vanadium zone brick and high vanadium brick have the same diameter, %zone can be derived by the ratio of the volume of the low vanadium zone over the sum of the volumes of the 2 zones. For comparison, coated with the low vanadium catalyst only (%zone volume$_{LV}$ = 100%) and with the high vanadium catalyst only (%zone volume$_{LV}$ = 0%) were also investigated.

The bricks were placed so that the test gas came into contact with low vanadium zone first.

The $NO_x$ conversion at 100000 h$^{-1}$ SV, 1000 ppm NO, ANR=1.1 was measured as a function of the low V zone volume and compared to the reference ($2.5\%\ V_2O_5$, $3.75\%\ WO_3$, $2.00\%\ Sb_2O_5$). SV is the space velocity, and ANR is the ammonia to $NO_x$ ratio of the test gas.

It has to be noted that the 50% zone contains the same nominal amount of vanadium, tungsten and antimony as the reference.

Figure 13 shows the $NO_x$ conversion and $N_2O$ formation in ppm as a function of the respective % zone volume$_{LV}$. The dotted line represents the $NO_x$ conversion of the reference. The dashed line represents the 50% zone which has the same overall metal composition as the reference. The dotted dashed line shows the amount of $N_2O$ in ppm.

Figure 14 shows the $NO_x$ conversion (circles) and the $N_2O$ formation in ppm (crosses) at 200°C as a function of the %zone volume$_{LV}$. The dotted line represents the $NO_x$ conversion at 200°C for the reference. NOx conversion at 200°C for the 50% zone volume$_{LV}$ is similar to the conversion of the reference.. The $N_2O$ formation was zero for all samples, including the reference.

Figure 15 shows the $NO_x$ conversion (circles) and $N_2O$ formation in ppm (crosses) at 500°C as a function of the respective %zone volume$_{LV}$. The dotted line and dotted dashed line are $NO_x$ conversion and $N_2O$ yield of the reference, respectively. It has to be noted that the $NO_x$ conversion at 500°C for the 50% zone is significantly higher than the reference, while $N_2O$ emissions are lower than for the reference.

From the test results of Example 2, it can be concluded that the conversion at 200°C scales highly linearly with the vanadium concentration, the conversion at 500°C has a pronounced curvature, and the 50% zone performs better than the reference at high temperature while retaining the same low temperature conversion as the reference.

The improvement at high temperature of Example 2 can be rationalized by the same considerations as above for Example 1a.

The $NO_x$ conversion and the $N_2O$ formation are shown in Tables 7 and 8:

Table 7: $NO_x$ conversion as a function of temperature for Example 2

| %NO$_X$ conversion as a function of temperature of Example 2 | | | | | | | | | | | | | | | | | |
|---|---|---|---|---|---|---|---|---|---|---|---|---|---|---|---|---|---|
| | 150 | 175 | 200 | 225 | 250 | 275 | 300 | 325 | 350 | 375 | 400 | 425 | 450 | 475 | 500 | 525 | 550 |
| Reference | 4 | 9 | 20 | 36 | 54 | 70 | 80 | 85 | 88 | 89 | 88 | 86 | 82 | 76 | 65 | 48 | 29 |

(continued)

| %NO$_X$ conversion as a function of temperature of Example 2 | | | | | | | | | | | | | | | | | |
|---|---|---|---|---|---|---|---|---|---|---|---|---|---|---|---|---|---|
| | 150 | 175 | 200 | 225 | 250 | 275 | 300 | 325 | 350 | 375 | 400 | 425 | 450 | 475 | 500 | 525 | 550 |
| 0% zone | 6 | 14 | 28 | 46 | 65 | 78 | 85 | 89 | 91 | 91 | 90 | 87 | 82 | 73 | 59 | 40 | 21 |
| 25% zone | 5 | 12 | 24 | 42 | 60 | 74 | 83 | 88 | 90 | 90 | 89 | 88 | 84 | 78 | 69 | 56 | 41 |
| **50% zone** | **4** | **10** | **21** | **37** | **55** | **70** | **80** | **86** | **88** | **89** | **89** | **87** | **84** | **80** | **73** | **64** | **53** |
| 75% zone | 3 | 8 | 17 | 32 | 50 | 66 | 77 | 83 | 87 | 88 | 88 | 86 | 84 | 81 | 76 | 69 | 60 |
| 100% zone | 2 | 6 | 14 | 26 | 43 | 60 | 73 | 80 | 84 | 86 | 86 | 85 | 83 | 80 | 77 | 73 | 65 |

Table 8: $N_2O$ formation as a function of temperature for Example 2

| $N_2O$ formation in ppm as a function of temperature of Example 2 | | | | | | | | | | | | | | | | | |
|---|---|---|---|---|---|---|---|---|---|---|---|---|---|---|---|---|---|
| | 150 | 175 | 200 | 225 | 250 | 275 | 300 | 325 | 350 | 375 | 400 | 425 | 450 | 475 | 500 | 525 | 550 |
| **Reference** | **0.0** | **0.0** | **0.0** | **0.0** | **0.0** | **0.0** | **0.0** | **0.1** | **0.3** | **1.2** | **3.8** | **10.3** | **24.6** | **51.4** | **92.9** | **145.2** | **197.7** |
| 0% zone | 0.0 | 0.0 | 00 | 00 | 00 | 00 | 00 | 0.1 | 0.5 | 1.9 | 5.8 | 15.4 | 35.4 | 70.4 | 119.4 | 175.3 | 225.4 |
| 25% zone | 0.0 | 0.0 | 00 | 00 | 00 | 00 | 00 | 0.1 | 0.3 | 1.2 | 3.6 | 9.3 | 21.2 | 42.5 | 73.7 | 111.9 | 152.2 |
| **50% zone** | **0.0** | **0.0** | **0.0** | **0.0** | **0.0** | **0.0** | **0.0** | **0.1** | **0.2** | **0.8** | **2.2** | **5.7** | **13.2** | **27.1** | **48.7** | **78.3** | **115.6** |
| 75% zone | 0.0 | 0.0 | 00 | 00 | 00 | 00 | 00 | 00 | 0.1 | 0.4 | 1.3 | 3.4 | 7.9 | 17.0 | 32.5 | 57.2 | 94.1 |
| 100% zone | 0.0 | 0.0 | 00 | 00 | 00 | 00 | 00 | 00 | 00 | 0.2 | 0.6 | 1.6 | 4.0 | 9.2 | 19.6 | 40.0 | 77.4 |

**Example 3: Variation of the low vanadium zone volume with optimized promoters concentration for each zone**

**Sample preparation**

High vanadium slurry preparation:

A commercially available titanium dioxide in the anatase form was dispersed in water and then vanadium dioxide ($VO_2$), tungsten trioxide ($WO_3$), cerium dioxide ($CeO_2$) and antimony pentoxide ($Sb_2O_5$) were added in amounts so as to result in a catalyst of the composition 87 wt% $TiO_2$, 5.0 % $V_2O_5$, 1 wt% $WO_3$, 2 wt% $CeO_2$ and 5.0 wt% $Sb_2O_5$ and a washcoat loading of 380 g/l. The slurry was vigorously stirred and then milled in a commercially available agitator bead mill. The skilled person knows that additionally dispersing agents and surfactants can be used to improve the rheological behavior.
The slurry was coated onto a 260 cpsi corrugated substrate. The catalyst was calcined at 580 °C for 2 hours. Cylindrical cores 2"x3" were obtained.

Low vanadium slurry preparation:

A commercially available titanium dioxide in the anatase form was dispersed in water and then vanadium dioxide ($VO_2$), tungsten trioxide ($WO_3$) were added in amounts so as to result in a catalyst of the composition 89 wt% $TiO_2$, 2.0 % $V_2O_5$, 9 wt% $WO_3$ and a washcoat loading of 410 g/l. The slurry was vigorously stirred and then milled in a commercially available agitator bead mill. The skilled person knows that additionally dispersing agents and surfactants can be used to improve the rheological behavior.
The slurry was coated onto a 260 cpsi corrugated substrate. The catalyst was dried at 60 °C and then calcined at 580 °C for 2 hours. Cylindrical cores of 2"x3" were obtained.
Cores containing high vanadium and low vanadium amounts were cut in length and assembled to give different ratios between low vanadium over the total length of low vanadium and high vanadium length. For example, combining 0.75 inches of low vanadium core and 2.25 inches of high vanadium core gives a 25% zone ratio. Thus, the values in the leftmost column of Table 9 and 10 below indicate the percentage of the zone volume of the high vanadium zone, as explained for Example 2 above. The pure low vanadium core is the 100% zone, whereas the pure high vanadium core is the 0% zone. Both are reported as references in tables 9 and 10.
The bricks were placed so that the test gas came into contact with low vanadium zone first.

**Test of SCR activity**

The following volume ratios were tested at SV=50000 h$^{-1}$, NO=800 ppm, ANR=1.2, 4% $H_2O$, 12% $O_2$ between 175 °C and 550 °C.
The $NO_x$ conversion and the $N_2O$ yield are shown in Tables 9 and 10:

**Table 9: % $NO_x$ conversion as a function of temperature for Example 3**

| %$NO_x$ conversion as a function of temperature for different zone ratios | | | | | | | | | | | |
|---|---|---|---|---|---|---|---|---|---|---|---|
| | 175 | 200 | 230 | 250 | 300 | 400 | 425 | 460 | 480 | 500 | 550 |
| 0%zone | 65 | 86 | 96 | 98 | 99 | 100 | 99 | 98 | 93 | 84 | 38 |
| 14%zone | 61 | 83 | 95 | 97 | 99 | 100 | 99 | 98 | 95 | 87 | 53 |
| 24%zone | 59 | 82 | 94 | 97 | 99 | 99 | 99 | 98 | 95 | 89 | 60 |
| 33%zone | 57 | 81 | 94 | 97 | 99 | 100 | 99 | 98 | 96 | 91 | 66 |
| 37%zone | 57 | 81 | 94 | 97 | 99 | 100 | 99 | 99 | 96 | 91 | 66 |
| 53%zone | 51 | 77 | 92 | 96 | 99 | 99 | 99 | 98 | 96 | 92 | 68 |
| 61 %zone | 49 | 76 | 92 | 97 | 99 | 100 | 100 | 99 | 97 | 93 | 70 |
| 67%zone | 49 | 75 | 92 | 97 | 99 | 99 | 99 | 98 | 97 | 92 | 68 |
| 77%zone | 43 | 71 | 90 | 96 | 99 | 100 | 99 | 99 | 97 | 93 | 67 |
| 100%zone | 43 | 71 | 90 | 96 | 99 | 100 | 99 | 99 | 97 | 93 | 67 |

**Table 10: N$_2$O yield as a function of temperature for Example 3**

| N$_2$O yield as a function of temperature for different zone ratios | | | | | | | | | | | |
|---|---|---|---|---|---|---|---|---|---|---|---|
| | 175 | 200 | 230 | 250 | 300 | 400 | 425 | 460 | 480 | 500 | 550 |
| 0%zone | 0.000 | 0.001 | 0.001 | 0.001 | 0.001 | 0.006 | 0.011 | 0.030 | 0.047 | 0.076 | 0.160 |
| 14%zone | 0.000 | 0.000 | 0.001 | 0.001 | 0.001 | 0.004 | 0.008 | 0.022 | 0.035 | 0.056 | 0.132 |
| 24%zone | 0.000 | 0.000 | 0.001 | 0.001 | 0.001 | 0.004 | 0.007 | 0.019 | 0.030 | 0.049 | 0.115 |
| 33%zone | 0.000 | 0.000 | 0.001 | 0.001 | 0.001 | 0.003 | 0.006 | 0.016 | 0.026 | 0.044 | 0.111 |
| 37%zone | 0.000 | 0.000 | 0.001 | 0.001 | 0000 | 0.002 | 0.006 | 0.016 | 0.026 | 0.044 | 0.111 |
| 53%zone | 0.000 | 0.001 | 0.001 | 0.001 | 0.001 | 0.003 | 0.006 | 0.016 | 0.026 | 0.044 | 0.113 |
| 61%zone | 0.000 | 0.000 | 0.001 | 0.001 | 0000 | 0.002 | 0.005 | 0.015 | 0.025 | 0.042 | 0.107 |
| 67%zone | 0.000 | 0.001 | 0.001 | 0.001 | 0.001 | 0.003 | 0.006 | 0.015 | 0.025 | 0.041 | 0.107 |
| 77%zone | 0.000 | 0.001 | 0.001 | 0.001 | 0.001 | 0.002 | 0.005 | 0.013 | 0.022 | 0.037 | 0.090 |
| 100%zone | 0.000 | 0.001 | 0.001 | 0.001 | 0.001 | 0.002 | 0.005 | 0.013 | 0.022 | 0.037 | 0.090 |

SV=50000 h$^{-1}$ represents a possible scenario in real applications in heavy duty diesel vehicles. At these conditions the optimum zone volume of the low V catalyst is around 40-50%. At lower space velocities the optimum zone volume of the low V catalyst is expected to be lower than 40-50%, whereas at higher space velocities the plateau is reached only for % zone volume higher than 50%. The fact that the high temperature conversion reaches a plateau at 40-50% volume, allow to tune the remaining 50-60% volume high V for low temperature only, e.g. by increasing vanadium content to the maximum level coverage on TiO$_2$. The result is that the zone catalyst has high NO$_x$ conversion both at low and high temperature and the tradeoff between low and high temperature conversion is better that what can be obtained by tuning V$_2$O$_5$ in a non-zoned catalyst. Also, the concentration of known promoters of V on TiO2 based catalysts can be optimized separately on each zone to maximize the improvement at high and low temperature.

Figures 16 and 17 show the NO$_x$ conversion (circles) and the N$_2$O selectivity (crosses) of the samples of Example 3 at 200 and 550°C as a function of the temperature.

**Example 4: Variation of the vanadium and tungsten content in the low vanadium zone**

**Sample preparation**

High vanadium slurry preparation:

A commercially available titanium dioxide in the anatase form was dispersed in water and then vanadium dioxide (VO$_2$), tungsten trioxide (WO$_3$), cerium dioxide (CeO$_2$) and antimony pentoxide (Sb$_2$O$_5$) were added in amounts so as to result in a catalyst of the composition 87 wt% TiO$_2$, 5.0 % V$_2$O$_5$, 1 wt% WO$_3$, 2 wt% CeO$_2$ and 5.0 wt% Sb$_2$O$_5$ and a washcoat loading of 380 g/l. The slurry was vigorously stirred and then milled in a commercially available agitator bead mill. The skilled person knows that additionally dispersing agents and surfactants can be used to improve the rheological behavior.

The slurry was coated onto a 260 cpsi corrugated substrate. The catalyst was dried at room temperature calcined at 580 °C for 2 hours. Cylindrical cores 2"x3" were obtained.

Low vanadium slurry preparation:

A commercially available titanium dioxide in the anatase form was dispersed in water and then vanadium dioxide (VO$_2$), tungsten trioxide (WO$_3$) were added in amounts so as to result in a catalyst of the composition X % V$_2$O$_5$, Y wt% WO$_3$ and the remaining being TiO$_2$. The slurry was vigorously stirred and then milled in a commercially available agitator bead mill. The skilled person knows that additionally dispersing agents and surfactants can be used to improve the rheological behavior.

The slurry was coated onto a 260 cpsi corrugated substrate. The catalyst was calcined at 580 °C for 2 hours. Cylindrical cores of 2"x3" were obtained. The sample compositions are shown in Table 11.

The core containing high vanadium was cut in length to a 5 cm brick. Cores containing low vanadium were cut in length to 2.5 cm brick.

The brick were placed so that the test gas came into contact with the low vanadium zone first and with a spacing of 0.5 cm between the bricks.

The following test were performed at SV=50000 h$^{-1}$, NO=800 ppm, ANR=1.2, 4% $H_2O$, 12% $O_2$ from 175 °C to 550 °C:

**Table 11: Sample compositions of Example 4 (lengths of the low and high vanadium zone in cm, percentage of the low vanadium zone based on the overall catalyst volume, and amount of $V_2O_5$ and $WO_3$ in the respective sample**

| SAMPLE | Low vanadium (length) [cm] | High vanadium (length) [cm] | % zone low vanadium in overall catalyst volume | %$V_2O_5$ in low V zone | %$WO_3$ in low V zone |
|---|---|---|---|---|---|
| 4a | 2.5 | 5 | 33% | 2 | 9 |
| 4b | 2.5 | 5 | 33% | 1 | 12 |

The NO$_x$ conversion and the $N_2O$ yield are shown in Tables 12 and 13:

**Table 12: % NO$_x$ conversion as a function of temperature for Examples 4a and 4b**

| %NO$_X$ conversion as a function of the temperature | | | | | | | | | | | |
|---|---|---|---|---|---|---|---|---|---|---|---|
| | 175 | 200 | 230 | 250 | 300 | 400 | 425 | 460 | 480 | 500 | 550 |
| 4a | 57 | 81 | 94 | 97 | 99 | 100 | 99 | 98 | 96 | 91 | 66 |
| 4b | 50 | 73 | 89 | 94 | 99 | 99 | 99 | 99 | 97 | 93 | 76 |

**Table 13: $N_2O$ yield as a function of temperature for Examples 4a and 4b**

| $N_2O$ yield as a function of the Temperature | | | | | | | | | | | |
|---|---|---|---|---|---|---|---|---|---|---|---|
| | 175 | 200 | 230 | 250 | 300 | 400 | 425 | 460 | 480 | 500 | 550 |
| 4a | 0000 | 0.000 | 0.001 | 0.001 | 0.001 | 0.003 | 0.006 | 0.016 | 0.026 | 0.044 | 0.111 |
| 4b | 0.000 | 0.000 | 0.001 | 0.001 | 0.001 | 0.001 | 0.003 | 0.008 | 0.013 | 0.021 | 0.048 |

Fig. 18 shows the NO$_x$ conversion and $N_2O$ yield of Examples 4a and 4b.

**Example 5: Zoned arrangement on two adjacent cordierite substrates**

High vanadium slurry preparation:

A commercially available titanium dioxide in the anatase form, doped with 5% $SiO_2$, was dispersed in water and then vanadium dioxide ($VO_2$), tungsten trioxide ($WO_3$), cerium dioxide ($CeO_2$) and antimony pentoxide ($Sb_2O_5$) were added resulting in 4.25 % $V_2O_5$, 1 wt% $WO_3$, 2 wt% $CeO_2$ and 2.75 wt% $Sb_2O_5$ in the catalytically active composition. The slurry was vigorously stirred and then milled in a commercially available agitator bead mill. The skilled person knows that additionally dispersing agents and surfactants can be used to improve the rheological behavior.

The slurry was coated on a 400/4 cpsi cordierite with washcoat loading of 360 g/l. The sample was dried at 90 °C and calcined at 600 °C for 2 hours. The sample was hydrothermally aged at 550 °C for 100 hours.

Low vanadium slurry preparation:

A co,mmercially available titanium dioxide in the anatase form, doped with 5% $SiO_2$, was dispersed in water and then vanadium dioxide ($VO_2$), tungsten trioxide ($WO_3$) were added, resulting in , 2 % $V_2O_5$ and 6 wt% $WO_3$ in the catalytically active composition. The slurry was vigorously stirred and then milled in a commercially available agitator bead mill. The skilled person knows that additionally dispersing agents and surfactants can be used to improve the rheological behavior.

The slurry was coated on a 400/4 cpsi cordierite carrier with washcoat loading of 360 g/l. The sample was dried at 90 °C and calcined at 600 °C for 2 hours. The sample was hydrothermally aged at 550 °C for 100 hours.

Tests were performed at SV=100000 h$^{-1}$, NO=250 ppm, NH$_3$=300 ppm, 4% H$_2$O, 12% O$_2$, N$_2$ to balance from 175 to 550 °C for the pure low vanadium catalyst, high vanadium catalyst and a catalyst consisting of half volume of lowV and half volume of highV, with the lowV brick being at inlet.

The NO$_x$ conversion and the N$_2$O yield are shown in Tables 14 and 15:

**Table 14: % NO$_x$ conversion as a function of temperature for Example 5**

| %NO$_X$ conversion as a function of temperature | | | | | | | | | |
|---|---|---|---|---|---|---|---|---|---|
| | 175 | 200 | 250 | 300 | 350 | 400 | 450 | 500 | 550 |
| HighV | 30 | 55 | 85 | 93 | 95 | 95 | 91 | 76 | 31 |
| LowV | 15 | 30 | 68 | 89 | 94 | 95 | 93 | 87 | 64 |
| Ex 5 | 23 | 44 | 78 | 91 | 95 | 95 | 93 | 83 | 56 |

**Table 15: N$_2$O yield as a function of temperature for Example 5**

| N$_2$O yield as a function of temperature | | | | | | | | | |
|---|---|---|---|---|---|---|---|---|---|
| | 175 | 200 | 250 | 300 | 350 | 400 | 450 | 500 | 550 |
| HighV | 0.00 | 0.00 | 0.00 | 0.00 | 0.00 | 0.00 | 0.01 | 0.04 | 0.11 |
| LowV | 0.00 | 0.00 | 0.00 | 0.00 | 0.00 | 0.00 | 0.00 | 0.01 | 0.04 |
| Ex 5 | 0.00 | 0.00 | 0.00 | 0.00 | 0.00 | 0.00 | 0.00 | 0.02 | 0.05 |

Fig. 19 shows the NO$_x$ conversion and N$_2$O yield of Example 5.

**Example 6: Layered arrangement**

High vanadium slurry preparation:

A commercially available titanium dioxide in the anatase form was dispersed in water and then vanadium dioxide (VO$_2$), tungsten trioxide (WO$_3$), cerium dioxide (CeO$_2$) and antimony pentoxide (Sb$_2$O$_5$) were added in amounts so as to result in a catalyst of the composition 87 wt% TiO$_2$, 5.0 % V$_2$O$_5$, 1 wt% WO$_3$, 2 wt% CeO$_2$ and 5.0 wt% Sb$_2$O$_5$. The slurry was vigorously stirred and then milled in a commercially available agitator bead mill. The skilled person knows that additionally dispersing agents and surfactants can be used to improve the rheological behavior.

Low vanadium slurry preparation:

A commercially available titanium dioxide in the anatase form was dispersed in water and then vanadium dioxide (VO$_2$), tungsten trioxide (WO$_3$) were added in amounts so as to result in a catalyst of the composition 89 wt% TiO$_2$, 2.0 % V$_2$O$_5$, 9 wt% WO$_3$. The slurry was vigorously stirred and then milled in a commercially available agitator bead mill. The skilled person knows that additionally dispersing agents and surfactants can be used to improve the rheological behavior.

Coating of layers

The high vanadium slurry was coated onto a 260 cpsi corrugated substrate. The sample was dried at room temperature. A second layer with the low vanadium slurry was coated onto the same substrate. The sample was dried at room temperature. The catalyst was calcined at 580 °C for 2 hours. The resulting washcoat loading was 300 g/l (bottom layer with high vanadium slurry) and 100 g/l (top layer with low vanadium slurry).

Cores 2"x3" were obtained (Ex6). NO$_x$ and N$_2$O yield is compared to samples with the same washcoat loading, but coated only with the high vanadium slurry (HighV) and low vanadium slurry (LowV), respectively. Tests were performed at SV=100000 h$^{-1}$, NO=250 ppm, NH$_3$=300 ppm, 4% H$_2$O, 12% O$_2$, N$_2$ to balance from 175 to 550 °C.

The $NO_x$ conversion and the $N_2O$ yield are shown in Tables 16 and 17:

**Table 16: % $NO_x$ conversion as a function of temperature for Example 6 and Comparative Examples coated with one washcoat with high vanadium (High V) or low vanadium (LowV) only**

| %$NO_X$ conversion as a function of temperature | | | | | | | | | |
|---|---|---|---|---|---|---|---|---|---|
| | 175 | 200 | 250 | 300 | 300 | 400 | 450 | 500 | 550 |
| HighV | 45 | 65 | 86 | 93 | 93 | 95 | 91 | 73 | 27 |
| LowV | 21 | 41 | 74 | 89 | 89 | 95 | 94 | 86 | 60 |
| Ex 6 | 36 | 55 | 79 | 90 | 90 | 95 | 91 | 77 | 38 |

**Table 17: $N_2O$ yield as a function of temperature for Example 6 and Comparative Examples coated with one washcoat with high vanadium (High V) or low vanadium (Low V) content only**

| $N_2O$ yield as a function of temperature | | | | | | | | | |
|---|---|---|---|---|---|---|---|---|---|
| | 175 | 200 | 250 | 300 | 350 | 400 | 450 | 500 | 550 |
| HighV | 0.000 | 0.000 | 0.001 | 0.001 | 0.001 | 0.003 | 0.011 | 0.042 | 0.090 |
| LowV | 0.000 | 0.000 | 0.001 | 0.001 | 0.001 | 0.001 | 0.005 | 0.022 | 0.070 |
| Ex 6 | 0.000 | 0.001 | 0.001 | 0.001 | 0.001 | 0.002 | 0.009 | 0.035 | 0.081 |

Fig. 20 shows the % $NO_x$ conversion and the $N_2O$ yield of Example 6 and of the Comparative Examples coated with one washcoat with high vanadium (HighV) or low vanadium (LowV) content only.

Table 18 lists the ratio $V_{first}:V_{second}$ of the percentages by weight of vanadium contained in the first to the second $V/TiO_2$ SCR catalytically active composition for Examples 1 to 6.

| Example | $V_{first}:V_{second}$ |
|---|---|
| 1a | 0.50 |
| 1b | 0.68 |
| 1c | 0.20 |
| 2 | 0.67 |
| 3 | 0.40 |
| 4a | 0.40 |
| 4b | 0.20 |
| 5 | 0.47 |
| 6 | 0.40 |

**Claims**

1.  Emissions treatment systems for the removal of $NO_x$ from exhaust combustion gases comprising, in the following order, from upstream to downstream:

    a) means for the injection of ammonia or an ammonia precursor solution into the exhaust gas stream, and

    b) a catalytic device comprising

    i. at least one carrier substrate,
    ii. a material zone A comprising a first $V/TiO_2$ SCR catalytically active composition $SCR_{first}$ which comprises at least one oxide of vanadium supported on titanium dioxide,

iii. a material zone B comprising a second V/TiO$_2$ SCR catalytically active composition SCR$_{second}$ which comprises at least one oxide of vanadium supported on titanium dioxide,

wherein the two material zones are affixed to the at least one carrier substrate in such a way that the exhaust gas first comes into contact with material zone A and then with material zone B,

and

wherein the ratio V$_{first}$:V$_{second}$ of the percentages by weight of vanadium contained in the first to the second V/TiO$_2$ SCR catalytically active composition, each calculated as V$_2$O$_5$, is from 0.05 to 0.75.

2. Emissions treatment systems according to claim 1, wherein the at least one carrier substrate onto which material zones A and B are affixed are selected from ceramic flow-through substrates, ceramic wall-flow filters, ceramic partial filters, corrugated substrates or extruded substrates.

3. Emissions treatment system according to claim 1 or 2, wherein material zones A and B are affixed on the same carrier substrate, material zone A represents the upstream zone, material zone B represents the downstream zone; and material zones A and B are either arranged directly adjacent to one another, with or without overlapping, or there is a gap between them, and the carrier substrate is a ceramic flow-through substrate or a corrugated substrate.

4. Emissions treatment system according to claim 1 or 2, wherein material zone A is affixed on the upstream carrier substrate, and material zone B is affixed on the downstream carrier substrate; wherein the two substrates are, independently from one another, selected from ceramic flow-through substrates, ceramic wall-flow filters, ceramic partial filters, corrugated substrates and extruded substrates, and wherein the two substrates are either arranged directly adjacent to one another, but without overlapping or there is a gap between them, and wherein,

   - if the first, upstream carrier substrate is an extruded substrate, the material for the first carrier substrate and the material for material zone A are extruded to form the upstream extruded carrier substrate, and/or
   - if the second, downstream carrier substrate is an extruded substrate, the material for the second carrier substrate and the material for material zone B are extruded to form the downstream extruded carrier substrate, and/or
   - if the first, upstream carrier substrate is a ceramic wall-flow filter or a ceramic partial filter, material zone A is affixed on the inlet and/or outlet channels of said ceramic wall-flow filter or ceramic partial filter, and/or
   - if the second, downstream carrier substrate is a ceramic wall-flow filter or a ceramic partial filter, material zone B is affixed on the inlet and/or outlet channels of said ceramic wall-flow filter or ceramic partial filter.

5. Emissions treatment system according to claim 1 or 2, wherein material zone B is affixed to the carrier substrate, and material zone A is affixed to material zone B, and wherein the carrier substrate is a ceramic flow-through substrate, a corrugated substrate or an extruded substrate, and wherein, if the carrier substrate is an extruded substrate, the material for the carrier substrate and the material for material zone B are extruded to form the extruded carrier substrate

6. Emissions treatment system according to claim 1 or 2, wherein material zones A and B are affixed on the same carrier substrate, which is a ceramic wall-flow filter or a ceramic partial filter, and material zone is affixed on the inlet channels, and material zone B is affixed on the outlet channels.

7. Emissions treatment system according to claim 4, wherein material zones A and B are present on two different carrier substrates and wherein there is a gap between these two carrier substrates, and wherein another device is placed between these two carrier substrates, and wherein the other device is

   - another catalytic device, selected from another SCR catalytic device, or a ceramic wall-flow filter, or a ceramic partial filter, or an SDPF, or
   - a measurement device, selected from a NO$_x$ sensor, an NH$_3$ sensor, or a sensor for measuring the backpressure, or
   - a means for the injection of ammonia or ammonia precursor solution into the exhaust gas stream.

8. Emissions treatment system according to any one of claims 1 to 9, wherein the first V/TiO$_2$ SCR catalytically active composition the first SCR catalytically active composition comprises 0.5 to 4.0 wt.-% vanadium, and optionally 0 to 15 wt.-% tungsten; and optionally antimony, cerium, niobium and/or molybdenum in amounts of 0 to 8 wt.-% each; and optionally 0 to 10 wt.-% of silicon, and optionally 0 to 6 wt.-% of zirconium; calculated as V$_2$O$_5$, WO$_3$, Sb$_2$O$_5$,

$CeO_2$, $Nb_2O_5$, MoOs, $SiO_2$ and $ZrO_2$ and based on the total weight of the first SCR catalytically active composition, wherein the remainder for adding up to a total amount of 100% is represented by $TiO_2$.

9.  Emissions treatment system according to any one of claims 1 to 10, wherein the second $V/TiO_2$ SCR catalytically active composition comprises 2 to 8 wt.-% vanadium; and optionally 0 to 15 wt.-% tungsten and optionally antimony, niobium and/or molybdenum in amounts of 0 to 8 wt.-% each; and optionally 0 to 6 wt.-% cerium; and optionally 0 to 6 wt.-% zirconium; and optionally 0 to 10 wt.-% of silicon; calculated as $V_2O_5$, $WO_3$, $Sb_2O_5$, $Nb_2O_5$, MoOs, $CeO_2$, $ZrO_2$ and $SiO_2$ and based on the total weight of the second SCR catalytically active composition, wherein the remainder for adding up to a total amount of 100% is represented by $TiO_2$.

10. An emissions treatment system according to any one of claims 1 to 13, wherein said emissions treatment system is arranged in a close-coupled position.

11. An emissions treatment system according to any one of claims 1 to 13, wherein said emissions treatment system is arranged in an underfloor position.

12. An emissions treatment system according to any one of claims 1 to 15, wherein a carrier substrate onto which a zeolite, which is promoted with copper and optionally one or two additional metals, is affixed, is located directly downstream of the catalytic device according to the present invention.

13. A method for the removal of $NO_x$ emissions from exhaust gases of internal combustion engines, and optionally also for the removal of particulate matter, the method comprising, in the following order, from upstream to downstream:

    a) injecting ammonia or an ammonia precursor solution into the exhaust gas stream,
    b) introducing the exhaust gas from step a) into a catalytic device for the removal of nitrogen oxides from the exhaust gas of combustion engines according to any one of claims 1 to 14.

14. A method for the removal of $NO_x$ emissions from exhaust gases of internal combustion engines, and optionally also for the removal of particulate matter according to claim 15, wherein, after step b) the exhaust gas is subsequently introduced into a carrier substrate onto which a zeolite, which is promoted with copper and optionally one or two additional metals, is affixed, is located directly downstream of the catalytic device according to the present invention.

15. A method according to claim 13 or 14, wherein the internal combustion engine is selected from gasoline, diesel, CNG (compressed natural gas), alcohol-fueled and hydrogen internal combustion engines ($H_2$ ICE).

Fig. 1

**flow
direction**

A    B

S

Fig. 2

**flow
direction**

10

A    B

S

Fig. 3

**flow
direction**

15

A    B

S1    S2

Fig. 4

**flow    20
direction**

A

S1

B

S2

Fig. 5

flow
direction

A

S1

OD

B

S2

Fig. 6:

flow
direction

A

B

Fig. 7

A

2

flow
direction

1

2

B

Fig. 8

flow
direction

5

1

2

A

2

B

3

Fig. 9

flow
direction

15

1

2

A

2

B

S2

4

Fig. 10

flow
direction

S3 + A

S4 + B

Fig. 11

**flow
direction**

→

S3 + A

→

S4 + B

Fig. 12

**flow
direction**

→

A

S4 + B

Fig. 13

Fig. 14

Fig. 15

Fig. 16

Fig. 17

Fig. 18

Fig. 19

Fig. 20

Europäisches
Patentamt

European
Patent Office

Office européen
des brevets

# EUROPEAN SEARCH REPORT

**Application Number**

EP 23 18 9538

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2016/288094 A1 (MALMBERG STEPHAN [DE] ET AL) 6 October 2016 (2016-10-06) | 1-3,5,6, 8-11,13, 15 | INV. B01D53/94 |
| Y | * examples 9-13, 15, 17 * | 4,7,12, 14 | |
| Y | WO 2022/188808 A1 (BASF CORP [US]; ZHANG JIADI [CN]) 15 September 2022 (2022-09-15) * page 11, line 3 – page 13, line 1; claims 1, 5; table 1 * * page 19, lines 18-36; example 4 * | 4,7,12, 14 | |
| A | JP 2021 090961 A (JOHNSON MATTHEY PLC) 17 June 2021 (2021-06-17) * paragraphs [0099] – [0101], [0129], [0235] – [0241]; example 3 * | 1-15 | |

**TECHNICAL FIELDS SEARCHED (IPC)**

B01D

The present search report has been drawn up for all claims

| Place of search | Date of completion of the search | Examiner |
|---|---|---|
| The Hague | 4 January 2024 | Focante, Francesca |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 18 9538

This annex lists the patent family members relating to the patent documents cited in the above-mentioned European search report.
The members are as contained in the European Patent Office EDP file on
The European Patent Office is in no way liable for these particulars which are merely given for the purpose of information.

04-01-2024

| Patent document cited in search report | | Publication date | Patent family member(s) | | Publication date |
|---|---|---|---|---|---|
| US 2016288094 | A1 | 06-10-2016 | BR | 112016011587 B1 | 15-12-2020 |
| | | | CN | 105636690 A | 01-06-2016 |
| | | | EP | 2875863 A1 | 27-05-2015 |
| | | | EP | 3074126 A1 | 05-10-2016 |
| | | | JP | 6496309 B2 | 03-04-2019 |
| | | | JP | 2017503632 A | 02-02-2017 |
| | | | KR | 20160091394 A | 02-08-2016 |
| | | | PL | 3074126 T3 | 31-10-2018 |
| | | | RU | 2016125301 A | 09-01-2018 |
| | | | US | 2016288094 A1 | 06-10-2016 |
| | | | WO | 2015075083 A1 | 28-05-2015 |
| WO 2022188808 | A1 | 15-09-2022 | BR | 112023017899 A2 | 24-10-2023 |
| | | | CN | 117015437 A | 07-11-2023 |
| | | | EP | 4304775 A1 | 17-01-2024 |
| | | | KR | 20230156089 A | 13-11-2023 |
| | | | WO | 2022188808 A1 | 15-09-2022 |
| JP 2021090961 | A | 17-06-2021 | JP | 7273868 B2 | 15-05-2023 |
| | | | JP | 2021090961 A | 17-06-2021 |

EPO FORM P0459

For more details about this annex : see Official Journal of the European Patent Office, No. 12/82

**REFERENCES CITED IN THE DESCRIPTION**

**Patent documents cited in the description**

- WO 2011081727 A1
- US 2020276561 A1
- WO 2022058404 A1
- US 2016288094 A1

- EP 2023057506 W
- EP 2023057507 W
- EP 2023057509 W